# EUROPEAN PATENT APPLICATION

(11) **EP 3 763 756 A1**
(43) Date of publication of application: **13.01.2021**
(21) Application number: 18908513.7
(22) Date of filing: 29.11.2018
(51) Int. Cl.: C08F 236/04, B60C 1/00, C08F 4/44, C08F 4/606

(54) **COPOLYMER, METHOD FOR PRODUCING COPOLYMER, RUBBER COMPOSITION AND TIRE**

(30) Priority: 05.03.2018 JP 2018038957; 11.10.2018 JP 2018192717
(71) Applicant: Bridgestone Corporation, Chuo-Ku Tokyo 104-8340 (JP)
(72) Inventor: TAKANO Shigenaga, Tokyo 104-8340 (JP); TARDIF Olivier, Tokyo 104-8340 (JP)
(74) Representative: Kato, Yumiko
(86) International application number: PCT/JP2018/044040
(87) International publication number: WO 2019/171679

(57) **Abstract**

An object of the present disclosure is to provide a copolymer which is reduced in heat generation in a low strain region and exhibits good workability, while having excellent wear resistance and crack growth resistance. To achieve the object, the present disclosure proposes a copolymer containing at least a non-conjugated olefin unit and a conjugated diene unit, wherein: a content of the non-conjugated olefin unit therein is equal to or larger than 40 mol %; and a degree of crystallinity derived from the non-conjugated olefin unit in the temperature range of 100 °C to 150 °C, measured by a differential scanning calorimeter (DSC), is equal to or smaller than 4.0 %. The present disclosure also proposes a method for manufacturing the copolymer.

## Description

### TECHNICAL FIELD

The present invention relates to a copolymer, a method for manufacturing a copolymer, a rubber composition, and a tire.

### BACKGROUND ART

In general, a rubber article (such as a tire, a conveyor belt, a rubber damper, quake-absorbing rubber or the like) is required to be excellent in durability (fracture resistance, wear resistance, resistance to crack growth, and the like) and weatherproofness. A variety of rubber components and rubber compositions have been developed to satisfy such a demand of a rubber article as described above.
For example, PTL 1 discloses a copolymer of a conjugated diene compound and a non-conjugated olefin compound, wherein a conjugated diene unit thereof has a cis-1,4 bond content of greater than 70.5 mol % and the non-conjugated olefin is contained in an amount of 10 mol % or more. PTL 1 also discloses that the copolymer is used for manufacturing a rubber composition being excellent in weatherproofness and crack growth resistance.

### CITATION LIST

### Patent Literature

PTL 1: WO2012/014455

### SUMMARY OF THE INVENTION

### Technical Problems

However, PTL 1 fails to discuss a chain length of a non-conjugated olefin unit of the copolymer, although a chain length of a non-conjugated olefin unit of the copolymer is an important factor affecting heat generating property in a low strain region and workability of the copolymer.

In view of this, an object of the present disclosure is to provide a copolymer which is reduced in heat generation in a low strain region and exhibits good workability, while having excellent wear resistance and crack growth resistance.
Further, another object of the present disclosure is to provide a method for manufacturing a copolymer, which method allows production of a copolymer which is reduced in heat generation in a low strain region and exhibits good workability, while having excellent wear resistance and crack growth resistance.
Yet further, yet another object of the present disclosure is to provide a rubber composition capable of reducing rolling resistance of a tire, while having high wear resistance and high crack growth resistance, and a tire exhibiting low rolling resistance, while having high wear resistance and high crack growth resistance.

The present disclosure has been contrived in order to solve the aforementioned problems and the primary features thereof are as follows.

A copolymer of the present disclosure is a copolymer containing at least a non-conjugated olefin unit and a conjugated diene unit, wherein:
a content of the non-conjugated olefin unit therein is equal to or larger than 40 mol %; and
a degree of crystallinity derived from the non-conjugated olefin unit in the temperature range of 100 °C to 150 °C, measured by a differential scanning calorimeter (DSC), is equal to or smaller than 4.0 %.
The copolymer of the present disclosure as described above is reduced in heat generation in a low strain region and exhibits good workability, while having excellent wear resistance and crack growth resistance.

It is preferable that the copolymer of the present disclosure further contains an aromatic vinyl unit. A chain length of the non-conjugated olefin unit can be easily reduced in this case.

In a preferable example of the copolymer of the present disclosure, the non-conjugated olefin unit is an acyclic non-conjugated olefin unit. Weatherproofness of the copolymer improves in this case.

It is preferable that the acyclic non-conjugated olefin unit is constituted of only an ethylene unit in the present disclosure. An acyclic non-conjugated olefin compound, from which the acyclic non-conjugated olefin unit is derived, is easily available and thus production cost of the copolymer can be reduced in this case.

In another preferable example of the copolymer of the present disclosure, the conjugated diene unit includes 1,3-butadiene unit and/or an isoprene unit. A conjugated diene compound, from which the conjugated diene unit is derived, is easily available and thus production cost of the copolymer can be reduced in this case.

In yet another preferable example of the copolymer of the present disclosure, the conjugated diene unit includes only 1,3-butadiene unit. A conjugated diene compound, from which the conjugated diene unit is derived, is more easily available and thus production cost of the copolymer can be further reduced than otherwise in this case.

In yet another preferable example of the copolymer of the present disclosure, the aromatic vinyl unit includes a styrene unit. An aromatic vinyl compound, from which the aromatic vinyl unit is derived, is easily available and thus production cost of the copolymer can be reduced in this case.

In yet another preferable example of the copolymer of the present disclosure, a content of the non-conjugated olefin unit is in the range of 40 to 97 mol %, a content of the conjugated diene unit is in the range of 1 to 50 mol %, and a content of the aromatic vinyl unit is in the range of 2 to 35 mol %. Wear resistance and crack growth resistance of the copolymer further improves and waterproofness thereof also improves in this case.

A first method for manufacturing a copolymer of the present disclosure is a method for manufacturing a copolymer containing at least a non-conjugated olefin unit and a conjugated diene unit, wherein the method comprises the processes of:
aging a catalyst composition; and
copolymerizing at least a non-conjugated olefin compound and a conjugated diene compound under the presence of the catalyst composition thus aged, the catalyst composition including:
   a rare earth element-containing compound (A) containing a rare earth element compound or a reactant resulted from a reaction between the rare earth element compound and a Lewis base;
   an organic metal compound (B) represented by the following general formula (I):

      YR¹ₐR²_{b}R³_{c} ... (I)

      (In general formula (I), Y represents a metal selected from the group 1, 2, 12 and 13 elements in the periodic table, R¹ and R² each represent a C₁₋₁₀ hydrocarbon group or a hydrogen atom, R³ represents a C₁₋₁₀ hydrocarbon group, R¹, R² and R³ may be of either the same type or different types, a = 1 and b = c = 0 when Y is a metal selected from the group 1 elements in the periodic table, a = b = 1 and c = 0 when Y is a metal selected from the groups 2, 12 elements in the periodic table, and a = b = c = 1 when Y is a metal selected from the group 13 elements in the periodic table.);
   at least one compound selected from the group consisting of an ionic compound (C) and a halogen compound (D); and
   at least one compound (E) selected from the group consisting of a non-conjugated olefin compound and a conjugated diene compound.
According to the aforementioned first method for manufacturing a copolymer of the present disclosure, it is possible to obtain a copolymer which is reduced in heat generation in a low strain region and exhibits good workability, while having excellent wear resistance and crack growth resistance.

A second method for manufacturing a copolymer of the present disclosure is a method for manufacturing a copolymer containing at least a non-conjugated olefin unit and a conjugated diene unit, wherein the method comprises the process of copolymerizing at least a non-conjugated olefin compound and a conjugated diene compound under the presence of a catalyst composition, the catalyst composition including:
a rare earth element-containing compound (A) containing a rare earth element compound or a reactant resulted from a reaction between the rare earth element compound and a Lewis base;
an organic metal compound (B) represented by the following general formula (I):

   YR¹ₐR²_{b}R³_{c} ... (I)

   (In general formula (I), Y represents a metal selected from the group 1, 2, 12 and 13 elements in the periodic table, R¹ and R² each represent a C₁₋₁₀ hydrocarbon group or a hydrogen atom, R³ represents a C₁₋₁₀ hydrocarbon group, R¹, R² and R³ may be of either the same type or different types, a = 1 and b = c = 0 when Y is a metal selected from the group 1 elements in the periodic table, a = b = 1 and c = 0 when Y is a metal selected from the groups 2, 12 elements in the periodic table, and a = b = c = 1 when Y is a metal selected from the group 13 elements in the periodic table.);
at least one compound selected from the group consisting of an ionic compound (C) and a halogen compound (D); and
at least one compound (E') selected from the group consisting of a non-conjugated olefin compound and a conjugated diene compound which are different in types from the non-conjugated olefin compound and the conjugated diene compound which are copolymerized in the copolymerization process.
According to the aforementioned second method for manufacturing a copolymer of the present disclosure, it is possible to obtain a copolymer which is reduced in heat generation in a low strain region and exhibits good workability, while having excellent wear resistance and crack growth resistance.

In a preferable example of the first/second method for manufacturing a copolymer of the present disclosure, the copolymer further contains an aromatic vinyl unit and the copolymerization process includes copolymerizing the non-conjugated olefin compound, the conjugated diene compound and an aromatic vinyl compound. A chain length of the non-conjugated olefin unit can be easily reduced in this case.

In yet another preferable example of the first/second method for manufacturing a copolymer of the present disclosure, the copolymer has a content of the non-conjugated olefin unit in the range of 40 to 97 mol %, a content of the conjugated diene unit in the range of 1 to 50 mol %, and a content of the aromatic vinyl unit in the range of 2 to 35 mol %. Wear resistance and crack growth resistance of the resulting copolymer further improves and waterproofness thereof also improves in this case.

The catalyst composition may further contain aluminoxane (F) in the first/second method for manufacturing a copolymer of the present disclosure. The desired copolymer can be easily obtained in this case.

In yet another preferable example of the first/second method for manufacturing a copolymer of the present disclosure, the compound (E) or the compound (E') is a non-conjugated olefin compound having three or more carbon atoms. A degree of crystallinity derived from the non-conjugated olefin unit in the temperature range of 100 °C to 150 °C, measured by a DSC, of the resulting copolymer can be reduced in this case.

In yet another preferable example of the first/second method for manufacturing a copolymer of the present disclosure, the compound (E) or the compound (E') is a cyclic non-conjugated olefin compound. A degree of crystallinity derived from the non-conjugated olefin unit in the temperature range of 100 °C to 150 °C, measured by a DSC, of the resulting copolymer can be reduced in this case.

In yet another preferable example of the first/second method for manufacturing a copolymer of the present disclosure, the compound (E) or the compound (E') is at least one selected from norbornene, 1,3-butadiene and dicyclopentadiene. A degree of crystallinity derived from the non-conjugated olefin unit in the temperature range of 100 °C to 150 °C, measured by a DSC, of the resulting copolymer can be reduced in this case.

A rubber composition of the present disclosure characteristically contains the aforementioned copolymer. The rubber composition of the present disclosure, having high wear resistance and high crack growth resistance, can decrease rolling resistance of a tire when it is applied to the tire.

A tire of the present disclosure characteristically uses the aforementioned rubber composition. The tire of the present disclosure, having high wear resistance and high crack growth resistance, exhibits low rolling resistance.

According to the present disclosure, it is possible to provide a copolymer which is reduced in heat generation in a low strain region and exhibits good workability, while having excellent wear resistance and crack growth resistance.
Further, according to the present disclosure, it is possible to provide a method for manufacturing a copolymer, which method enables obtaining a copolymer which is reduced in heat generation in a low strain region and exhibits good workability, while having excellent wear resistance and crack growth resistance.
Yet further, according to the present disclosure, it is possible to provide a rubber composition capable of reducing rolling resistance of a tire, while having high wear resistance and high crack growth resistance, and a tire exhibiting low rolling resistance, while having high wear resistance and high crack growth resistance.

### BRIEF DESCRIPTION OF THE DRAWINGS

In the accompanying drawings, wherein:
- FIG. 1: is a DSC chart of copolymer a;
- FIG. 2: is a DSC chart of copolymer A;
- FIG. 3: is a DSC chart of copolymer B; and
- FIG. 4: is a DSC chart of copolymer C.

### DETAILED DESCRIPTION

Hereinafter, a copolymer, a method for manufacturing a copolymer, a rubber composition, and a tire of the present disclosure will be demonstratively described in detail based on embodiments thereof.

### < Copolymer >

A copolymer of the present disclosure is a copolymer containing at least a non-conjugated olefin unit and a conjugated diene unit, wherein a content of the non-conjugated olefin unit therein is equal to or larger than 40 mol %, and a degree of crystallinity derived from the non-conjugated olefin unit in the temperature range of 100 °C to 150 °C, measured by a differential scanning calorimeter (DSC), is equal to or smaller than 4.0 %.

The copolymer of the present disclosure contains a non-conjugated olefin unit, whereby a crystal component derived from the non-conjugated olefin unit collapses and thus the copolymer can effectively dissipate energy when the copolymer is significantly deformed. Further, the copolymer of the present disclosure, having a content of the non-conjugated olefin unit of ≥ 40 mol %, exhibits high energy-dissipating ability in a high strain region. Yet further, the copolymer of the present disclosure thus having high energy-dissipating ability in a high strain region can suppress wear and crack growth due to significant deformation, by dissipating energy.
An endothermic peak in the range of 100 °C to 150 °C, determined by DSC measurement, is derived from a non-conjugated olefin unit having a relatively long chain length. In this regard, the copolymer of the present disclosure contains a non-conjugated olefin unit component having a relatively short chain length by a relatively large content because a degree of crystallinity derived from the non-conjugated olefin unit in the range of 100 °C to 150 °C measured by a DSC of the copolymer is ≤ 4.0 %. Abundance of a non-conjugated olefin unit having relatively long chain length represents abundance of a crystal component (a hard portion) in the copolymer, i.e. hysteresis loss is easily generated by even a low strain there. Moreover, a crystal component or a hard portion of the copolymer deteriorates workability in mixing and kneading of a rubber composition when the copolymer is blended into the rubber composition. In this respect, the copolymer of the present disclosure, containing a non-conjugated olefin unit component having a relatively short chain length by a relatively large content, exhibits low hysteresis loss when a low strain is applied and thus is reduced in heat generation in a low strain region and also exhibits good workability in mixing and kneading of a rubber composition when the copolymer is blended into the rubber composition.
Accordingly, the copolymer of the present disclosure is reduced in heat generation in a low strain region and exhibits good workability, while having excellent wear resistance and crack growth resistance.

In the copolymer of the present disclosure, a degree of crystallinity derived from a non-conjugated olefin unit thereof in the temperature range of 100 °C to 150 °C, measured by a differential scanning calorimeter (DSC), is ≤ 4.0 %, preferably ≤ 2.5 %, and more preferably ≤ 1.0 %. The lower limit of the degree of crystallinity is not particularly restricted and may be 0 %. The smaller degree of crystallinity derived from the non-conjugated olefin unit in the range of 100 °C to 150 °C measured by a DSC represents the shorter chain length of the non-conjugated olefin unit and thus the more decrease in heat generation in a low strain region and the better workability in mixing and kneading process when the copolymer is blended into a rubber composition.
In the present disclosure, a "degree of crystallinity" represents a value measured according to the method described in Examples.

The copolymer of the present disclosure, containing at least a non-conjugated olefin unit and a conjugated diene unit, may either be constituted of only a non-conjugated olefin unit and a conjugated diene unit or further contain another monomer unit.

The non-conjugated olefin unit is a structural unit derived from a non-conjugated olefin compound as a monomer. The non-conjugated olefin compound represents an aliphatic unsaturated hydrocarbon compound having at least one carbon-carbon double bond. Type of the non-conjugated olefin compound is not particularly restricted but the non-conjugated olefin compound preferably has two to ten carbon atoms. Specific examples of the non-conjugated olefin compound described above include: α-olefin such as ethylene, propylene, 1-butene, 1-pentene, 1-hexene, 1-heptene, 1-octene, and the like; a heteroatom-substituted alkene compound such as vinyl pivalate, 1-phenylthio ethene, N-vinylpyrrolidone; and the like. Either a single type or combination of two or more types of these examples may be used as the non-conjugated olefin compound. The non-conjugated olefin compound as a monomer of the copolymer is preferably an acyclic non-conjugated olefin compound in terms of improving weatherproofness of a rubber composition, a tire or the like using the resulting copolymer. The acyclic non-conjugated olefin compound is preferably α-olefin and particularly preferably ethylene. An acyclic non-conjugated olefin compound like α-olefin, ethylene in particular, has a double bond at α-position of the olefin, whereby the compound can be effectively polymerized with a conjugated diene compound described below and can also further improve, when it is used for a copolymer, weatherproofness of a rubber composition and a tire using the copolymer.
In the copolymer of the present disclosure, the non-conjugated olefin unit is preferably an acyclic non-conjugated olefin unit. Weatherproofness of a rubber composition and a tire using the resulting copolymer improves when the non-conjugated olefin unit is an acyclic non-conjugated olefin unit.
In the copolymer of the present disclosure, it is particularly preferable that the non-conjugated olefin unit is constituted of only an ethylene unit. In a case where the non-conjugated olefin unit is constituted of only an ethylene unit, a non-conjugated olefin compound from which the non-conjugated olefin unit is derived, i.e. ethylene, is easily available and thus production cost of the copolymer can be reduced.
In the copolymer of the present disclosure, a content of the non-conjugated olefin unit is to be ≥ 40 mol %, preferably ≥ 45 mol %, more preferably ≥ 55 mol %, particularly preferably ≥ 60 mol %, and preferably ≤ 97 mol %, more preferably ≤ 95 mol %, further more preferably ≤ 90 mol %. When a content of the non-conjugated olefin unit is ≥ 40 mol %, the copolymer exhibits high energy-dissipating ability in a high strain region thereof. Further, a content of the conjugated diene unit or the aromatic vinyl unit described below decreases consequently in this case, thereby improving weatherproofness and/or fracture resistance (breaking strength (Tb) in particular) at high temperature of the copolymer. When a content of the non-conjugated olefin unit is ≤ 97 mol %, a content of the conjugated diene unit or the aromatic vinyl unit increases as a result, thereby improving fracture resistance (elongation at break (Eb) in particular) at high temperature of the copolymer. The content of the non-conjugated olefin unit is preferably in the range of 40-97 mol %, more preferably in the range of 45-95 mol %, and further more preferably in the range of 55-90 mol %, of the copolymer in its entirety.

The conjugated diene unit is a structural unit derived from a conjugated diene compound as a monomer. Although type of the conjugated diene compound is not particularly restricted, the conjugated diene compound preferably has four to eight carbon atoms. Specific examples of the conjugated diene compound include 1,3-butadiene, isoprene, 1,3-pentadiene, 2,3-dimethyl-1,3-butadiene, and the like. 1,3-butadiene and isoprene are preferable and 1, 3-butradiene is particularly preferable among these examples in terms of availability. Either a single type or combination of two or more types of these examples may be used as the conjugated diene compound. In the copolymer of the present disclosure, the conjugated diene unit preferably includes 1,3-butadiene unit and/or isoprene unit. When the conjugated diene unit includes 1,3-butadiene unit and/or isoprene unit, a conjugated diene compound from which the conjugated diene unit is derived (i.e. 1,3-butadiene, isoprene) is easily available and thus production cost of the copolymer can be reduced.
Further, in the copolymer of the present disclosure, it is particularly preferable that the conjugated diene unit is constituted exclusively of 1,3-butadiene unit. When the conjugated diene unit is constituted exclusively of 1,3-butadiene unit, a conjugated diene compound from which the conjugated diene unit is derived (i.e. 1,3-butadiene) is easily available and thus production cost of the copolymer can be reduced.
In the copolymer of the present disclosure, a content of the conjugated diene unit is preferably ≥ 1 mol %, more preferably ≥ 3 mol %, and preferably ≤ 50 mol %, more preferably ≤ 40 mol %, further more preferably ≤ 30 mol %, yet further more preferably ≤ 25 mol %, particularly preferably ≤ 15 mol %. A content of the conjugated diene unit of ≥ 1 mol % is preferable because then vulcanization of the copolymer is significantly facilitated and a rubber composition and a rubber article being excellent in elongation can be obtained. A content of the conjugated diene unit of ≤ 50 mol % achieves excellent weatherproofness. A content of the conjugated diene is preferably in the range of 1-50 mol % and more preferably in the range of 3-40 mol % of the copolymer in its entirety.

It is preferable that the copolymer of the present disclosure further contains an aromatic vinyl unit, in addition to the non-conjugated olefin unit and the conjugated diene unit. When the copolymer contains an aromatic vinyl unit, chain lengths of the non-conjugated olefin units can be more easily reduced than otherwise.
The aromatic vinyl unit is a structural unit derived from an aromatic vinyl compound as a monomer. An "aromatic vinyl compound" represents an aromatic compound which has been substituted by at least vinyl group. Although type of the aromatic vinyl compound is not particularly restricted, the aromatic vinyl compound preferably has eight to ten carbon atoms. Examples of the aromatic vinyl compound include styrene, α-methylstyrene, o-methylstyrene, m-methylstyrene, p-methylstyrene, o, p-dimethyl styrene, o-ethylstyrene, m-ethylstyrene, p-ethylstyrene, and the like. Styrene is preferable among these examples in terms of easy availability. Either a single type or combination of two or more types of the examples may be used as the aromatic vinyl compound. The copolymer of the present disclosure preferably includes a styrene unit as the aromatic vinyl unit. When the copolymer includes a styrene unit, an aromatic vinyl compound from which the aromatic vinyl unit is derived (i.e. styrene) is easily available and thus production cost of the copolymer can be reduced.
In the copolymer of the present disclosure, a content of the aromatic vinyl unit may be 0 mol % but is preferably ≥ 2 mol %, more preferably ≥ 3 mol %, and preferably ≤ 35 mol %, more preferably ≤ 30 mol %, further more preferably ≤ 25 mol %. A content of the aromatic vinyl unit of ≥ 2 mol % enhances fracture resistance at high temperature. An effect caused by the non-conjugated olefin unit and the conjugated diene unit is conspicuous when a content of the aromatic vinyl unit is ≤ 35 mol %. A content of the aromatic vinyl unit is preferably in the range of 2-35 mol %, more preferably in the range of 3-30 mol %, and further more preferably in the range of 3-25 mol %, of the copolymer in its entirety.

It is preferable in the copolymer of the present disclosure that a content of the non-conjugated olefin unit is in the range of 40-97 mol %, a content of the conjugated diene unit is in the range of 1-50 mol %, and a content of the aromatic vinyl unit is in the range of 2-35 mol %. Wear resistance and crack growth resistance of a rubber composition having the copolymer blended thereinto further enhances and weatherproofness thereof also improves in this case.

The copolymer of the present disclosure has a weight average molecular weight (Mw) in terms of polystyrene preferably in the range of 10,000 to 10,000,000, more preferably in the range of 100,000 to 9,000,000, and further more preferably in the range of 150,000 to 8,000,000. The weight average molecular weight (Mw) of the copolymer, of 10,000 or more, ensures that the rubber composition has satisfactory mechanical strength and the MW of the copolymer, of 10,000,000 or less, ensures good workability of the rubber composition.

Further, the copolymer of the present disclosure has a number average molecular weight (Mn) in terms of polystyrene preferably in the range of 10,000 to 10,000,000, more preferably in the range of 50,000 to 9,000,000, and further more preferably in the range of 100,000 to 8,000,000. The number average molecular weight (Mn) of the copolymer, of 10,000 or more, ensures that the rubber composition has satisfactory mechanical strength and the Mn of the copolymer, of 10,000,000 or less, ensures good workability of the rubber composition.

Yet further, the copolymer of the present disclosure has a molecular weight distribution [Mw/Mn (the weight average molecular weight/ the number average molecular weight)] preferably in the range of 1.00 to 4.00, more preferably in the range of 1.50 to 3.50, and further more preferably in the range of 1.80 to 3.00. It is possible to make physical properties of the copolymer satisfactorily uniform by setting the molecular weight distribution of the copolymer to be ≤ 4.00.

A weight average molecular weight (Mw), a number average molecular weight (Mn), and a molecular distribution (Mw/Mn) are determined, relative to those of polystyrene as a standard reference material, by gel permeation chromatography (GPC).

In the copolymer of the present disclosure, the melting point thereof measured by differential scanning calorimetry (DSC) is preferably in the range of 30 °C to 130 °C and more preferably in the range of 30 °C to 110 °C. A degree of crystallinity of the copolymer increases and thus wear resistance and crack growth resistance thereof further improve when the melting point of the copolymer is equal to or higher than 30 °C. Workability improves when the melting point of the copolymer is equal to or lower than 130 °C.
The melting point represents a value measured by using a differential scanning calorimeter according to JIS K 7121-1987 in the present disclosure.

In the copolymer of the present disclosure, endothermic energy at the endothermic peak thereof in the range of 0 °C to 120 °C, measured by a differential scanning calorimeter (DSC), is preferably in the range of 10 J/g to 150 J/g and more preferably in the range of 30 J/g to 120 J/g. When the endothermic energy at the endothermic peak of the copolymer is ≥ 10 J/g, a degree of crystallinity of the copolymer is high enough and wear resistance and crack growth resistance of the copolymer further improves. When the endothermic energy at the endothermic peak of the copolymer is ≤ 150 J/g, workability of the copolymer improves.
In the present disclosure, the "endothermic energy at the endothermic peak" represents a value of the endothermic energy at the endothermic peak, measured by using by a differential scanning calorimeter according to JIS K 7121-1987 in the range of 0°C to 120 °C in the 1^{st} run when a sample was heated from -150 °C to 150 °C at a temperature-increasing rate of 10 °C/minute.

In the copolymer of the present disclosure, the glass transition temperature (Tg) measured by a differential scanning calorimeter (DSC) is preferably equal to or lower than 0 °C and more preferably in the range of -100 °C to -10 °C. Workability improves when the glass transition temperature of the copolymer is equal to or lower than 0 °C.
The "glass transition temperature" represents a value measured by using a differential scanning calorimeter according to JIS K 7121-1987 in the present disclosure.

It is preferable that a main chain of the copolymer of the present disclosure is constituted of only acyclic structures because then crack growth resistance of the copolymer can be further improved. NMR is employed as a primary measurement means for determining whether a main chain of the copolymer is constituted of only acyclic structures or not. Specifically, when a peak derived from a cyclic structure existing in a main chain (e.g. any of peaks appearing in a range of 10 ppm to 24 ppm in cases of three-membered, four-membered, and five-membered cyclic structures) is not observed, the result indicates that the main chain of the copolymer is constituted exclusively of acyclic structures.

### < Method for manufacturing copolymer >

The copolymer of the present disclosure described above can be obtained by a method (a first method for manufacturing a copolymer of the present disclosure), wherein the method comprises the processes of: aging a catalyst composition; and copolymerizing at least a non-conjugated olefin compound and a conjugated diene compound under the presence of the catalyst composition thus aged, the catalyst composition including:
a rare earth element-containing compound (A) containing a rare earth element compound or a reactant resulted from a reaction between the rare earth element compound and a Lewis base;
an organic metal compound (B) represented by the following general formula (I):

   YR¹ₐR²_{b}R³_{c} ... (I)

   (In general formula (I), Y represents a metal selected from the group 1, 2, 12 and 13 elements in the periodic table, R¹ and R² each represent a C₁₋₁₀ hydrocarbon group or a hydrogen atom, R³ represents a C₁₋₁₀ hydrocarbon group, R¹, R² and R³ may be of either the same type or different types, a = 1 and b = c = 0 when Y is a metal selected from the group 1 elements in the periodic table, a = b = 1 and c = 0 when Y is a metal selected from the groups 2, 12 elements in the periodic table, and a = b = c = 1 when Y is a metal selected from the group 13 elements in the periodic table.);
at least one compound selected from the group consisting of an ionic compound (C) and a halogen compound (D); and
at least one compound (E) selected from the group consisting of a non-conjugated olefin compound and a conjugated diene compound.
According to the aforementioned first method, the compound (E) is added to the catalyst composition in advance and then the catalyst composition is aged so that the compound (E) is incorporated into the catalyst composition in a sufficient manner, whereby it is possible to suppress incorporation of the compound (E) into the copolymer and thus reduce endothermic energy at the endothermic peak in the temperature range of 100 °C to 150 °C determined by DSC measurement, of the resulting copolymer, thereby successfully decreasing a degree of crystallinity derived from the non-conjugated olefin unit in the range of 100 °C to 150 °C measured by DSC.
Accordingly, it is possible to obtain a copolymer which is reduced in heat generation in a low strain region and exhibits good workability, while having excellent wear resistance and crack growth resistance, by the aforementioned first method for manufacturing a copolymer of the present disclosure.

Alternatively, the copolymer of the present disclosure described above can be obtained by a method (a second method for manufacturing a copolymer of the present disclosure), wherein the method comprises the process of copolymerizing at least a non-conjugated olefin compound and a conjugated diene compound under the presence of a catalyst composition, the catalyst composition including:
a rare earth element-containing compound (A) containing a rare earth element compound or a reactant resulted from a reaction between the rare earth element compound and a Lewis base;
an organic metal compound (B) represented by the following general formula (I):

   YR¹ₐR²_{b}R³_{c} ... (I)

   (In general formula (I), Y represents a metal selected from the group 1, 2, 12 and 13 elements in the periodic table, R¹ and R² each represent a C₁₋₁₀ hydrocarbon group or a hydrogen atom, R³ represents a C₁₋₁₀ hydrocarbon group, R¹, R² and R³ may be of either the same type or different types, a = 1 and b = c = 0 when Y is a metal selected from the group 1 elements in the periodic table, a = b = 1 and c = 0 when Y is a metal selected from the groups 2, 12 elements in the periodic table, and a = b = c = 1 when Y is a metal selected from the group 13 elements in the periodic table.);
at least one compound selected from the group consisting of an ionic compound (C) and a halogen compound (D); and
at least one compound (E') selected from the group consisting of a non-conjugated olefin compound and a conjugated diene compound which are different in types from the non-conjugated olefin compound and the conjugated diene compound which are copolymerized in the copolymerization process.
It is possible to reduce endothermic energy at the endothermic peak in the range of 100 °C to 150 °C determined by DSC measurement, of the copolymer thus generated, and decrease a degree of crystallinity derived from the non-conjugated olefin unit in the range of 100 °C to 150 °C measured by DSC by adding the compound (E') to the catalyst composition. In this regard, the compound (E'), selected from the group consisting of a non-conjugated olefin compound and a conjugated diene compound which are different in types from the non-conjugated olefin compound and the conjugated diene compound which are copolymerized in the copolymerization process, should be less reactive to a polymerization reaction than the non-conjugated olefin compound and the conjugated diene compound which are used as monomers for the copolymerization process, so that the compound (E') is hardly incorporated into the resulting copolymer. It is therefore possible, according to the aforementioned second method, to reduce endothermic energy at the endothermic peak in the range of 100 °C to 150 °C determined by DSC measurement, of the resulting copolymer, without aging the catalyst composition.
Accordingly, it is possible to obtain a copolymer which is reduced in heat generation in a low strain region and exhibits good workability, while having excellent wear resistance and crack growth resistance, by the aforementioned second method for manufacturing a copolymer of the present disclosure.

In a case where the copolymer is to further contain an aromatic vinyl unit, it is possible to manufacture a copolymer containing an aromatic vinyl unit by copolymerizing the non-conjugated olefin compound, the conjugated diene compound and an aromatic vinyl compound under the presence of the catalyst composition. Chain lengths of the non-conjugated olefin units can be more easily reduced by using an aromatic vinyl compound as a monomer.

The same definitions as described in the context of the section < Copolymer> are applied to the non-conjugated olefin compound and the conjugated diene compound used as monomers in the aforementioned first/second method for manufacturing a copolymer. Similarly, the same definitions as described in the context of the section < Copolymer> are applied to the aromatic vinyl compound which may be used in the aforementioned first/second method for manufacturing a copolymer.

The rare earth element-containing component (A) for use in the catalyst composition includes a rare earth element compound or a reactant resulted from a reaction between the rare earth element compound and a Lewis base. More specifically, the rare earth element-containing component (A) includes: a rare earth element compound or a reactant resulted from a reaction between the rare earth element compound and a Lewis base, which compound/reactant has a bond between a rare earth element and carbon (which compound/reactant will occasionally be referred to as "component (A-1)" hereinafter); and a rare earth element compound or a reactant resulted from a reaction between the rare earth element compound and a Lewis base, which compound/reactant does not have a bond between a rare earth element and carbon (which compound/reactant will occasionally be referred to as "component (A-2)" hereinafter).

Examples of the component (A-1) include:
a metallocene complex represented by following general formula (II): 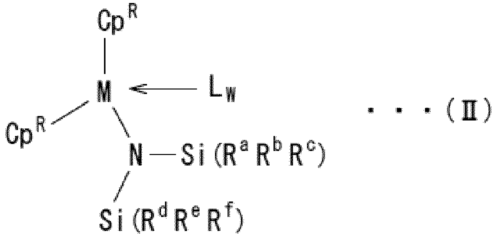 (In formula (II), M represents lanthanoid, scandium or yttrium; Cp^{R}S each independently represent an unsubstituted/substituted indenyl; R^{a} to R^{f} each independently represent a C₁₋₃ alkyl group or hydrogen atom; L represents a neutral Lewis base; and w represents an integer in the range of 0 to 3);
a metallocene complex represented by following general formula (III): 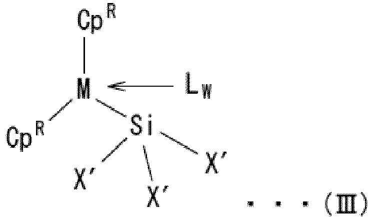 (In formula (III), M represents lanthanoid, scandium or yttrium; Cp^{R}S each independently represent an unsubstituted/substituted indenyl; X' represents hydrogen atom, halogen atom, alkoxy, thiolate, amino, silyl, or a C₁₋₂₀ monovalent hydrocarbon group; L represents a neutral Lewis base; and w represents an integer in the range of 0 to 3); and
a half metallocene cation complex represented by following general formula (IV): 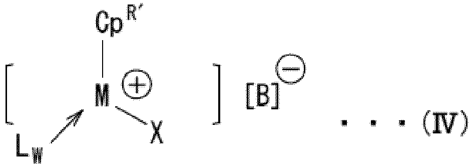 (In formula (IV), M represents a lanthanoid element, scandium or yttrium; Cp^{R'} represents an unsubstituted/substituted cyclopentadienyl, an unsubstituted/substituted indenyl or an unsubstituted/substituted fluorenyl; X represents hydrogen atom, halogen atom, alkoxy, thiolate, amino, silyl, or a C₁₋₂₀ monovalent hydrocarbon group; L represents a neutral Lewis base; w represents an integer in the range of 0 to 3); and [B]⁻ represents a non-coordinating anion).

Cp^{R}S are unsubstituted/substituted indenyls in the metallocene complexes represented by general formula (II) and general formula (III), respectively. Cp^{R} having an indenyl ring as the base skeleton may be represented as C₉H_{7-X}R_{X} or C₉H_{11-X}R_{X}, wherein X represents an integer in the range of 0 to 7 or 0 to 11; Rs preferably each independently represent hydrocarbyl or metalloid group; and the number of carbon atoms of the hydrocarbyl group is preferably in the range of 1 to 20, more preferably in the range of 1 to 10, and further more preferably in the range of 1 to 8. Specifically, preferable examples of the hydrocarbyl group include methyl, ethyl, phenyl, benzyl groups and the like. Examples of metalloid of the metalloid group include germyl Ge, stannyl Sn, and silyl Si. The metalloid group preferably includes a hydrocarbyl group which is defined in the same manner as the aforementioned hydrocarbyl group. Specific examples of the metalloid group include trimethylsilyl group, and the like. Specific examples of the substituted indenyl include 2-phenylindenyl, 2-methylindenyl, and the like. The two Cp^{R}S in general formula (II) may be of either the same type or different types. The two Cp^{R}S in general formula (III) may be of either the same type or different types.

Cp^{R'} is an unsubstituted/substituted cyclopentadienyl, an unsubstituted/substituted indenyl or an unsubstituted/substituted fluorenyl group in the half metallocene cation complex represented by general formula (IV). An unsubstituted/substituted indenyl group is preferable as Cp^{R'} among these examples.

In general formula (IV), Cp^{R'} having a cyclopentadienyl ring as the base skeleton is represented as C₅H_{5-X}R_{X}, wherein X is an integer in the range of 0 to 5; Rs preferably each independently represent hydrocarbyl or metalloid group; and the number of carbon atoms of the hydrocarbyl group is preferably in the range of 1 to 20, more preferably in the range of 1 to 10, and further more preferably in the range of 1 to 8. Specifically, preferable examples of the hydrocarbyl group include methyl, ethyl, phenyl, benzyl groups and the like. Examples of metalloid of the metalloid group include germyl Ge, stannyl Sn, and silyl Si. The metalloid group preferably includes a hydrocarbyl group which is defined in the same manner as the aforementioned hydrocarbyl group. Specific examples of the metalloid group include trimethylsilyl group and the like. Specific examples of Cp^{R'} having a cyclopentadienyl ring as the base skeleton include compounds represented by the following structural formulae:

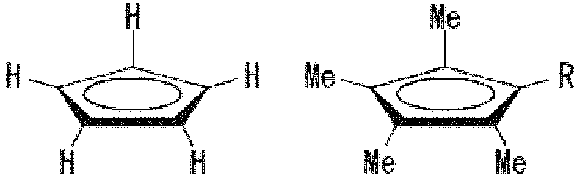

### (In these structural formulae, R represents hydrogen atom, methyl or ethyl group.)

Cp^{R'} having an indenyl ring as the base skeleton, as well as preferable examples thereof, in general formula (IV) is defined in the same manner as Cp^{R} in general formula (II) and Cp^{R} in general formula (III).

Cp^{R'} having a fluorenyl ring as the base skeleton in general formula (IV) is represented as C₁₃H_{9-X}R_{X} or C₁₃H_{17-X}R_{X}, wherein X is an integer in the range of 0 to 9 or 0 to 17; Rs preferably each independently represent hydrocarbyl or metalloid group; and the number of carbon atoms of the hydrocarbyl group is preferably in the range of 1 to 20, more preferably in the range of 1 to 10, and further more preferably in the range of 1 to 8. Specifically, preferable examples of the hydrocarbyl group include methyl, ethyl, phenyl, benzyl groups and the like. Examples of metalloid of the metalloid group include germyl Ge, stannyl Sn, and silyl Si. The metalloid group preferably includes a hydrocarbyl group which is defined in the same manner as the aforementioned hydrocarbyl group. Specific examples of the metalloid group include trimethylsilyl group and the like.

The core metal M in each of general formulae (II), (III) and (IV) is a lanthanoid element, scandium or yttrium. The lanthanoid elements include the fifteen elements having atomic numbers 57-71 in the periodic table and any of these elements is acceptable. Preferable examples of the core metal M include samarium Sm, neodymium Nd, praseodymium Pr, gadolinium Gd, cerium Ce, holmium Ho, scandium Sc, and yttrium Y.

The metallocene complex represented by general formula (II) includes a silylamide ligand [-N(SiR₃)₂]. R groups included in the silylamide ligand (i.e. R^{a} to R^{f} in general formula (II)) each independently represent a C₁₋₃ alkyl group or a hydrogen atom. It is preferable that at least one of R^{a} to R^{f} is a hydrogen atom. The catalyst can be easily synthesized and a non-conjugated olefin compound and an aromatic vinyl compound are easily introduced due to relatively little hindrance around the silicon atom when at least one of R^{a} to R^{f} is a hydrogen atom. For similar reasons, it is more preferable that at least one of R^{a} to R^{c} is a hydrogen atom and at least one of R^{d} to R^{f} is a hydrogen atom. Methyl group is preferable as the alkyl group.

The metallocene complex represented by general formula (III) includes a silyl ligand [-SiX'₃]. X' groups included in the silyl ligand [-SiX'₃], as well as preferable examples thereof, are defined in the same manner as X group in general formula (IV) described below.

In general formula (IV), X is a group selected from the group consisting of hydrogen atom, halogen atom, alkoxy, thiolate, amino, silyl, and a C₁₋₂₀ monovalent hydrocarbon groups. Acceptable examples of the halogen atom represented by X in general formula (IV) include fluorine, chlorine, bromine and iodine atoms. Chlorine or bromine atom is preferable.

Examples of the alkoxy group represented by X in general formula (IV) include: aliphatic alkoxy group such as methoxy, ethoxy, propoxy, n-butoxy, isobutoxy, sec-butoxy, tert-butoxy, and the like; and aryloxy group such as phenoxy, 2,6-di-tert-butylphenoxy, 2,6-diisopropylphenoxy, 2,6-dineopentylphenoxy, 2-tert-butyl-6-isopropylphenoxy, 2-tert-butyl-6-neopentylphenoxy, 2-isopropyl-6-neopentylphenoxy, and the like. 2,6-di-tert-butylphenoxy is preferable as the alkoxy group among these examples.

Examples of the thiolate group represented by X in general formula (IV) include: aliphatic thiolate group such as thiomethoxy, thioethoxy, thiopropoxy, n-thiobutoxy, thoisobutoxy, sec-thiobutoxy, tert-thiobutoxy, and the like; and arylthiolate group such as thiophenoxy, 2,6-di-tert-butylthiophenoxy, 2,6-diisopropylthiophenoxy, 2,6-dineopentylthiophenoxy, 2-tert-butyl-6-isopropylthiophenoxy, 2-tert-butyl-6-thioneopentylphenoxy, 2-isopropyl-6-thioneopentylphenoxy, 2,4,6-triisopropylthiophenoxy, and the like. 2,4,6-triisopropylthiophenoxy is preferable as the thiolate group among these examples.

Examples of the amino group represented by X in general formula (IV) include: aliphatic amino group such as dimethylamino, diethylamino, diisopropylamino, and the like; arylamino group such as phenylamino, 2,6-di-tert-butylphenylamino, 2,6-diisopropylphenylamino, 2,6-dineopentylphenylamino, 2-tert-butyl-6-isopropylphenylamino, 2-tert-butyl-6-neopentylphenylamino, 2-isopropyl-6-neopentylphenylamino, 2,4,6-tri-tert-butylphenylamino, and the like; bis(trialkylsilyl)amino group such as bis(trimethylsilyl)amino; and the like. Bis(trimethylsilyl)amino is preferable as the amino group among these examples.

Examples of the silyl group represented by X in general formula (IV) include trimethylsilyl, tris(trimethylsilyl)silyl, bis(trimethylsilyl)methylsilyl, trimethylsilyl(dimethyl)silyl, (triisopropylsilyl)bis(trimethylsilyl)silyl, and the like. Tris(trimethylsilyl)silyl is preferable as the silyl group among these examples.

Specific examples of the C₁₋₂₀ monovalent hydrocarbon group represented by X in general formula (IV) include: normal/branched aliphatic hydrocarbon group such as methyl, ethyl, n-propyl, isopropyl, n-butyl, isobutyl, sec-butyl, tert-butyl, neopentyl, hexyl, octyl; aromatic hydrocarbon group such as phenyl, tolyl, naphthyl; aralykyl group such as benzyl; a hydrocarbon group containing silicon atom such as trimethylsilylmethyl, bis(trimethylsilyl)methyl; and the like. Methyl, ethyl, isobutyl, trimethylsilylmethyl, and the like are preferable as the C₁₋₂₀ monovalent hydrocarbon group among these examples.

Bistrimethylsilylamino group or a C₁₋₂₀ monovalent hydrocarbon group is preferable as X in general formula (IV).

Examples of the non-coordinating anion represented by [B]⁻ in general formula (IV) include quadrivalent boron anion. Specific examples of the quadrivalent boron anion include tetraphenylborate, tetrakis(monofluorophenyl)borate, tetrakis(difluorophenyl)borate, tetrakis(trifluorophenyl)borate, tetrakis(tetrafluorophenyl)borate, tetrakis(pentafluorophenyl)borate, tetrakis(tetrafluoromethylphenyl)borate, tetra(tolyl)borate, tetra(xylyl)borate, triphenyl(pentafluorophenyl)borate, [tris(pentafluorophenyl)phenyl]borate, tridecahydride-7,8-dicarbaundecaborate, and the like. Tetrakis(pentafluorophenyl)borate is preferable as the quadrivalent boron anion among these examples.

The metallocene complexes represented by general formulae (II) and (III), respectively, and the half metallocene cation complex represented by general formula (IV) each further include 0 to 3, preferably 0 to 1, neutral Lewis base L. Examples of the neutral Lewis base L include tetrahydrofuran, diethyl ether, dimethylaniline, trimethylphosphine, lithium chloride, neutral olefin, neutral diolefin, and the like. The neutral Lewis bases L may be of either the same type or different types when the complex includes a plurality of neutral Lewis bases L.

The metallocene complexes represented by general formulae (II) and (III), respectively, and the half metallocene cation complex represented by general formula (IV) may each exist as any of monomer, dimer or another type of multimer.

The metallocene complex represented by general formulae (II) can be obtained by, for example, reacting lanthanoid trishalide, scandium trishalide or yttrium trishalide with an indenyl salt (such as potassium or lithium indenyl salt) and a bis(trialkylsilyl)amine salt (such as potassium or lithium salt of bis(trialkylsilyl)amine) in a solvent. The reaction temperature may be set around the room temperature, which allows production in a mild condition. The reaction time may be set as desired and is generally in the range of a few hours to a few days. Type of the reaction solvent is not particularly limited but preferably a solvent capable of dissolving the raw materials and a reaction product. For example, toluene can be used. An example of a reaction for obtaining the metallecene complex represented by general formula (II) is shown below.

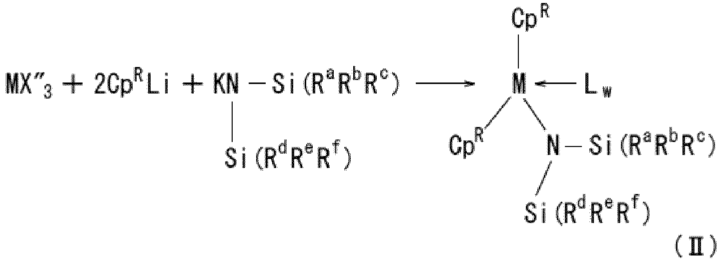

### (In the reaction example above, X" represents a halide.)

The metallocene complex represented by general formula (III) can be obtained by, for example, reacting lanthanoid trishalide, scandium trishalide or yttrium trishalide with an indenyl salt (such as potassium or lithium indenyl salt) and a silyl salt (such as potassium or lithium silyl salt) in a solvent. The reaction temperature may be set around the room temperature, which allows production in a mild condition. The reaction time may be set as desired and is generally in the range of a few hours to a few days. Type of the reaction solvent is not particularly limited but preferably a solvent capable of dissolving the raw materials and a reaction product. For example, toluene can be used. An example of a reaction for obtaining the metallocene complex represented by general formula (III) is shown below.

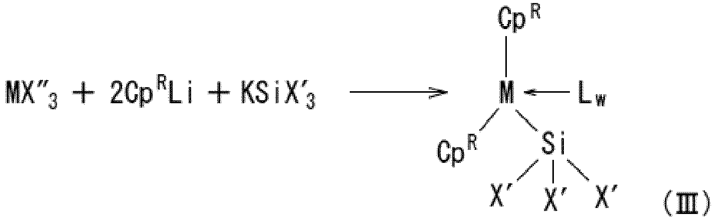

### (In the reaction example above, X" represents a halide.)

The half metallocene cation complex represented by general formulae (IV) can be obtained, for example, by a reaction shown below.

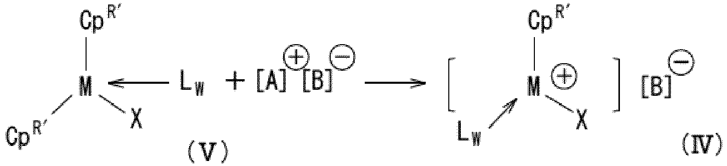

In the compound represented by general formula (V), M represents a lanthanoid element, scandium or yttrium; Cp^{R'}s each independently represent unsbstituted/substituted cyclopentadienyl, unsbstituted/substituted indenyl or unsbstituted/substituted fluorenyl; and X represents hydrogen atom, halogen atom, alkoxy, thiolate, amino, silyl, or a C₁₋₂₀ monovalent hydrocarbon group. L represents a neutral Lewis base and w represents an integer in the range of 0 to 3. [A]⁺ represents a cation and [B]⁻ represents a non-coordinating anion in an ionic compound represented by [A]⁺ [B]⁻.

Examples of the cation represented by [A]⁺ include carbonium cation, oxonium cation, amine cation, phosphonium cation, cycloheptatrienyl cation, ferrocenium cation having transition metal, and the like. Examples of the carbonium cation include trisubstituted carbonium cation such as triphenylcarbonium cation, tri(substituted phenyl)carbonium cation, and the like. Specific examples of the tri(substituted phenyl)carbonium cation include tri(methylphenyl)carbonium cation. Examples of the amine cation include: trialkylammonium cation such as trimethylammonium cation, triethylammonium cation, tripropylammonium cation, tributylammonium cation; N,N-dialkylanilinium cation such as N,N-dimethylanilinium cation, N,N-diethylanilinium cation, N,N-2,4,6-pentamethylanilinium cation; dialkylammonium cation such as diisopropylammonium cation, dicyclohexylammonium cation; and the like. Examples of phosphonium cation include triarylphosphonium cation such as triphenylphosphonium cation, tri(methylphenyl)phosphonium cation, tri(dimethylphenyl)phosphonium cation, and the like. N,N-dialkylanilinium cation or carbonium cation is preferable and N,N-dialkylanilinium cation is particularly preferable as [A]⁺ among these examples.

The ionic compound represented by general formula [A]⁺ [B]⁻ for use in the aforementioned reaction is, for example, a compound obtained by combining a non-coordinating anion and a cation respectively selected from the aforementioned examples and preferably N,N-dimethylanilinium tetrakis(pentafluorophenyl)borate, triphenylcarbonium tetrakis(pentafluorophenyl)borate, and the like. The ionic compound represented by general formula [A]⁺ [B]⁻ is added to the metallocene complex by an amount preferably 0.1 to 10 times, more preferably approximately 1 times, as much as the amount of the metallocene complex when compared in mol. In the case where the half metallocene cation complex represented by general formula (IV) is used for a polymerization reaction, the half metallocene cation complex represented by general formula (IV) may be directly provided into a polymerization reaction system or, alternatively, the half metallocene cation complex represented by general formula (IV) may be formed in a polymerization reaction system by providing a compound represented by general formula (V) and the ionic compound represented by general formula [A]⁺ [B]⁻ for use in the aforementioned reaction, respectively, in the polymerization reaction system. Further alternatively, the half metallocene cation complex represented by general formula (IV) may be formed in a polymerization reaction system by using the metallocene complex represented by general formula (II) or general formula (III) and the ionic compound represented by general formula [A]⁺ [B]⁻ in a combined manner in the polymerization reaction system.

Structures of the metallocene complex represented by general formula (II) or general formula (III), respectively, and the half metallocene cation complex represented by general formula (IV) are each preferably determined through x-ray structural analysis.

Other examples of the component (A-1) include a metallocene-based composite catalyst represented by the following formula (VI):

RₐMX_{b}QY_{b} (VI)

(In formula (VI), Rs each independently represent unsubstituted/substituted indenyl; M is coordinated with Rs; M represents a lanthanoid element, scandium or yttrium; Xs each independently represent a C₁₋₂₀ monovalent hydrocarbon group; M and Q are µ-coordinated with X; Q represents a group 13 element in the periodic table; Ys each independently represent a C₁₋₂₀ monovalent hydrocarbon group or a hydrogen atom; Q is coordinated with Y; and a = b = 2).

Preferable examples of the metallocene-based composite catalyst represented by formula (VI) include a metallocene-based composite catalyst represented by the following formula (VII): 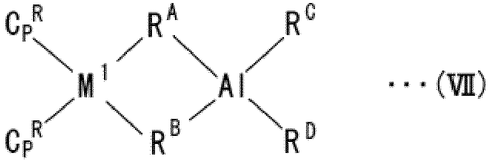 (In formula (VII), M¹ represents a lanthanoid element, scandium or yttrium; Cp^{R}S each independently represent unsubstituted/substituted indenyl; R^{A} and R^{B} each independently represent a C₁₋₂₀ hydrocarbon group; M¹ and Al are µ-coordinated with R^{A} and R^{B}; and R^{C} and R^{D} each independently represent a C₁₋₂₀ hydrocarbon group or a hydrogen atom.)
A targeted copolymer can be efficiently manufactured by using the metallocene-based composite catalyst described above. Further, it is possible to reduce an amount of alkylaluminum for use in the copolymer synthesis or even eliminate the alkylaluminum by using the metallocene-based composite catalyst described above, which, for example, has been combined with aluminum catalyst in advance to be a composite. It should be noted in this connection that a large amount of alkylaluminum is needed during the copolymer synthesis if the conventional catalyst system not using the aforementioned metallocene-based composite catalyst is employed. For example, alkylaluminum must be used by an amount at least 10 times as much as the chemically equivalent amount of a relevant metal catalyst in the conventional catalyst system not using the aforementioned metallocene-based composite catalyst. In contrast, in the case of using the metallocene-based composite catalyst described above, a superior catalytic effect is demonstrated by adding alkylaluminum by an amount around 5 times as much as the chemically equivalent amount of the metal catalyst.

With regard to the metallocene-based composite catalyst described above, the metal M in general formula (VI) is a lanthanoid element, scandium or yttrium. The lanthanoid elements include the fifteen elements having atomic numbers 57-71 and any of these elements is acceptable. Preferable examples of the metal M include samarium Sm, neodymium Nd, praseodymium Pr, gadolinium Gd, cerium Ce, holmium Ho, scandium Sc, and yttrium Y.

In formula (VI), Rs each independently represent unsubstituted/substituted indenyl and M is coordinated with Rs. Specific examples of the substituted indenyl group include 1,2,3-trimethyl indenyl, heptamethylindenyl, 1,2,4,5,6,7-hexamethylindenyl, and the like.

In formula (VI), Q represents a group 13 element in the periodic table and specific examples thereof include boron, aluminum, gallium, indium, thallium, and the like.

In formula (VI), Xs each independently represent a C₁₋₂₀ monovalent hydrocarbon group and M and Q are µ-coordinated with X. Examples of the C₁₋₂₀ monovalent hydrocarbon group include methyl, ethyl, propyl, butyl, pentyl, hexyl, heptyl, octyl, decyl, dodecyl, tridecyl, tetradecyl, pentadecyl, hexadecyl, heptadecyl, stearyl, and the like. The expression that "M and Q are µ-coordinated with X" represents that M and Q are coordinated with X in a crosslinking manner.

In formula (VI), Ys each independently represent a C₁₋₂₀ monovalent hydrocarbon group or a hydrogen atom and Q is coordinated with Y. In this connection, examples of the C₁₋₂₀ monovalent hydrocarbon group include methyl, ethyl, propyl, butyl, pentyl, hexyl, heptyl, octyl, decyl, dodecyl, tridecyl, tetradecyl, pentadecyl, hexadecyl, heptadecyl, stearyl, and the like.

In formula (VII), the metal M¹ is a lanthanoid element, scandium or yttrium. The lanthanoid elements include the fifteen elements having atomic numbers 57-71 and any of these elements is acceptable. Preferable examples of the metal M¹ include samarium Sm, neodymium Nd, praseodymium Pr, gadolinium Gd, cerium Ce, holmium Ho, scandium Sc, and yttrium Y.

In formula (VII), Cp^{R}S are unsbstituted/substituted indenyls. Cp^{R} having an indenyl ring as the base skeleton may be represented as C₉H_{7-X}R_{X} or C₉H_{11-X}R_{X}, wherein X is an integer in the range of 0 to 7 or 0 to 11; Rs preferably each independently represent hydrocarbyl or metalloid group; and the number of carbon atoms of the hydrocarbyl group is preferably in the range of 1 to 20, more preferably in the range of 1 to 10, and further more preferably in the range of 1 to 8. Specifically, preferable examples of the hydrocarbyl group include methyl, ethyl, phenyl, benzyl groups and the like. Examples of metalloid of the metalloid group include germyl Ge, stannyl Sn, and silyl Si. The metalloid group preferably includes a hydrocarbyl group which is defined in the same manner as the aforementioned hydrocarbyl group. Specific examples of the metalloid group include trimethylsilyl and the like.
Specific examples of the substituted indenyl include 2-phenylindenyl, 2-methylindenyl, and the like. The two Cp^{R}s in general formula (VII) may be of either the same type or different types.

In formula (VII), R^{A} and R^{B} each independently represent a C₁₋₂₀ monovalent hydrocarbon group and M¹ and Al are µ-coordinated with R^{A} and R^{B}. In this connection, examples of the C₁₋₂₀ monovalent hydrocarbon group include methyl, ethyl, propyl, butyl, pentyl, hexyl, heptyl, octyl, decyl, dodecyl, tridecyl, tetradecyl, pentadecyl, hexadecyl, heptadecyl, stearyl, and the like. The expression that "M¹ and Al are µ-coordinated with R^{A} and R^{B}" represents that M¹ and Al are coordinated with R^{A} and R^{B} in a crosslinking manner.

In formula (VII), R^{C} and R^{D} each independently represent a C₁₋₂₀ monovalent hydrocarbon group or a hydrogen atom. In this connection, examples of the C₁₋₂₀ monovalent hydrocarbon group include methyl, ethyl, propyl, butyl, pentyl, hexyl, heptyl, octyl, decyl, dodecyl, tridecyl, tetradecyl, pentadecyl, hexadecyl, heptadecyl, stearyl, and the like.

The metallocene-based composite catalyst described above can be obtained by reacting a metallocene complex represented by the following formula (VIII) with an organic aluminum compound represented by AlR^{K}R^{L}R^{M} in a solvent. 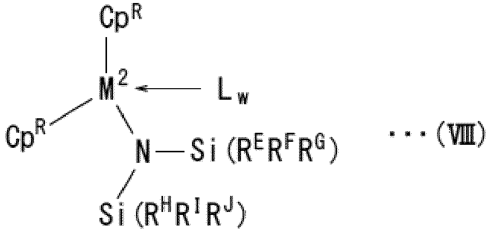 (In formula (VIII), M² represents a lanthanoid element, scandium or yttrium; Cp^{R}S each independently represent unsbstituted/substituted indenyl; R^{E} to R^{J} each independently represent a C₁₋₃ alkyl group or a hydrogen atom; L represents a neutral Lewis base; and w represents an integer in the range of 0 to 3).
The reaction temperature may be set around the room temperature, which allows production in a mild condition. The reaction time may be set as desired and is generally in the range of a few hours to a few days. Type of the reaction solvent is not particularly limited but preferably a solvent capable of dissolving the raw materials and a reaction product. For example, toluene or hexane can be used. The structure of the metallocene-based composite catalyst described above is preferably determined through ¹H-NMR or x-ray structural analysis.

In the metallocene complex represented by general formula (VIII), Cp^{R}s each independently represent unsbstituted/substituted indenyl and are defined in the same manner as Cp^{R}S in general formula (VII); and the metal M² is a lanthanoid element, scandium or yttrium and defined in the same manner as the metal M¹ in formula (VII).

The metallocene complex represented by formula (VIII) includes a silylamide ligand [-N(SiR₃)₂]. R groups included in the silylamide ligand (i.e. R^{E} to RJ in general formula (VIII) each independently represent a C₁₋₃ alkyl group or a hydrogen atom. It is preferable that at least one of R^{E} to R^{J} is a hydrogen atom. The catalyst can be easily synthesized when at least one of R^{E} to R^{J} is a hydrogen atom. Methyl group is preferable as the alkyl group.

The metallocene complex represented by formula (VIII) further includes 0 to 3, preferably 0 to 1, neutral Lewis base L. Examples of the neutral Lewis base L include tetrahydrofuran, diethyl ether, dimethylaniline, trimethylphosphine, lithium chloride, neutral olefin, neutral diolefin, and the like. The neutral Lewis bases L may be of either the same type or different types when the complex includes a plurality of neutral Lewis bases L.

The metallocene complex represented by general formula (VIII)
may exist as any of monomer, dimer or another type of multimer.

The organic aluminum compound for use in generation of the metallocene-based composite catalyst described above is represented by AlR^{K}R^{L}R^{M}, wherein R^{K} and R^{L} each independently represent a C₁₋₂₀ monovalent hydrocarbon group or a hydrogen atom; R^{M} represents a C₁₋₂₀ monovalent hydrocarbon group; and R^{M} may be of either the same type or a different type from R^{K} and R^{L}. Examples of the C₁₋₂₀ monovalent hydrocarbon group include methyl, ethyl, propyl, butyl, pentyl, hexyl, heptyl, octyl, decyl, dodecyl, tridecyl, tetradecyl, pentadecyl, hexadecyl, heptadecyl, stearyl, and the like.

Specific examples of the organic aluminum compound include trimethylaluminum, triethylaluminum, tri-n-propylaluminum, triisopropylaluminum, tri-n-butylaluminum, triisobutylaluminum, tri-t-butylaluminum, tripentylaluminum, trihexylaluminum, tricyclohexylaluminum, trioctylaluminum; hydrogenated diethylaluminum, hydrogenated di-n-propylaluminum, hydrogenated di-n-butylaluminum, hydrogenated diisobutylaluminum, hydrogenated dihexylaluminum, hydrogenated diisohexylaluminum, hydrogenated dioctylaluminum, hydrogenated diisooctylaluminum; ethylaluminum dihydride, n-propylaluminum dihydride, isobutylaluminum dihydride, and the like. Triethylaluminum, triisobutylaluminum, hydrogenated diethylaluminum and hydrogenated diisobutylaluminum are preferable as the organic aluminum compound among these examples. Either a single type or combination of two or more types of these examples may be used as the organic aluminum compound. An amount of the organic aluminum compound for use in generation of the metallocene-based composite catalyst is preferably 1 to 50 times, more preferably approximately 10 times, as much as the amount of the metallocene complex when compared in mol.

### The component (A-2)

The component (A-2) is a rare earth element compound or a reactant resulted from a reaction between the rare earth element compound and a Lewis base, wherein the rare earth element compound and the reactant thereof have no bond between a relevant rare earth metal and a carbon atom, respectively. A rare earth element compound or a reactant resulted from a reaction between the rare earth element compound and a Lewis base, having no bond between a relevant rare earth metal and a carbon atom, is stable as a compound and easy to handle. In the present invention, a "rare earth element compound" represents a compound containing a rare earth element (M), i.e. one of lanthanoid elements constituted of atomic number 57-71 elements in the periodic table; or scandium or yttrium.
Specific examples of the lanthanoid elements include lanthanum, cerium, praseodymium, neodymium, promethium, samarium, europium, gadolinium, terbium, dysprosium, holmium, erbium, thulium, ytterbium, and lutetium. Either a single type or combination of two or more types of the examples may be used as the of the component (A-2).

The rare earth element compound described above is preferably a salt or a complex compound containing a divalent/trivalent rare earth metal and more preferably a rare earth element compound having at least one type of ligand selected from hydrogen atom, halogen atom, and an organic compound residue. Further, the rare earth element compound or the reactant resulted from a reaction between the rare earth element compound and a Lewis base is preferably represented by following general formula (IX) or general formula (X):

M¹¹X¹¹2•L¹¹w ··· (IX)

M¹¹X¹¹3•L¹¹w ··· (X)

(In these formulae, M¹¹ represents a lanthanoid element, scandium or yttrium, X¹¹s each independently represent hydrogen atom, halogen atom, alkoxy group, thiolate group, amino group, silyl group, aldehyde residue, ketone residue, carboxylic acid residue, thiocarboxylic acid residue or phosphorus compound residue, L¹¹ represents a Lewis base, and w represents an integer in the range of 0 to 3.)

Examples of the group (ligand) bonded to a rare earth element of the rare earth element compound include hydrogen atom, halogen atom, alkoxy group (a group obtained by removing hydrogen from the hydroxy group of alcohol and capable of forming a metal alkoxide), thiolate group (a group obtained by removing hydrogen from the thiol group of a thiol compound and capable of forming a metal thiolate), amino group (a group obtained by removing one hydrogen atom bonded to nitrogen atom of ammonia, primary amine or secondary amine and capable of forming a metal amide), silyl group, a residue of aldehyde, a residue of ketone, a residue of carboxylic acid, a residue of thiocarboxylic acid, and a residue of a phosphorus compound.
Specific examples of a group (ligand) bonded to a rare earth element of the rare earth element compound include: hydrogen atom; aliphatic alkoxy group such as methoxy, ethoxy, propoxy, n-butoxy, isobutoxy, sec-butoxy, tert-butoxy, and the like; phenoxy, 2,6-di-tert-butylphenoxy, 2,6-diisopropylphenoxy, 2,6-dineopentylphenoxy, 2-tert-butyl-6-isopropylphenoxy, 2-tert-butyl-6-neopentylphenoxy, 2-isopropyl-6-neopentylphenoxy; aliphatic thiolate group such as thiomethoxy, thioethoxy, thiopropoxy, thio-n-butoxy, thioisobutoxy, thio-sec-butoxy, thio-tert-butoxy, and the like; aryl thiolate group such as thiophenoxy, 2,6-di-tert-butylthiophenoxy, 2,6-diisopropylthiophenoxy, 2,6-dineopentylthiophenoxy, 2-tert-butyl-6-isopropylthiophenoxy, 2-tert-butyl-6-thioneopentylphenoxy, 2-isopropyl-6-thioneopentylphenoxy, 2,4,6-triisopropylthiophenoxy, and the like; aliphatic amino group such as dimethylamino, diethylamino, disopropylamino, and the like; arylamino group such as phenylamino, 2,6-di-tert-butylphenylamino, 2,6-diisopropylphenylamino, 2,6-dineopentylphenylamino, 2-tert-butyl-6-isopropylphenylamino, 2-tert-buty-6-neopentylphenylamino, 2-isopropyl-6-neopentylphenylamino, 2,4,6-tert-butylphenylamino, and the like; bistrialkylsilylamino group such as bistrimethylsilylamino; silyl group such as trimethylsilyl, tris(trimethylsilyl)silyl, bis(trimethylsilyl)methylsilyl, trimethylsilyl(dimethyl)silyl, triisopropylsilyl(bistrimethylsilyl)silyl, and the like; a halogen atom such as fluorine, chlorine, bromine, iodine atoms; and the like.
Specific examples of the ligand further include: aldehyde residue such as salicylaldehyde, 2-hydroxy-1-naphthaldehyde, 2-hydroxy-3-naphthaldehyde, and the like; a residue of hydroxyphenone such as 2'-hydoxyacetophenone, 2'-hydoxybutylophenone, 2'-hydoxypropiophenone, and the like; a residue of diketone such as acetylacetone, benzoylacetone, propionylacetone, isobutylacetone, valeryl acetone, ethylacetylacetone, and the like; a residue of carboxylic acid such as isovaleric acid, caprylic acid, octanoic acid, lauric acid, myristic acid, palmitic acid, stearic acid, isostearic acid, oleic acid, linoleic acid, cyclopentanecarboxylic acid, naphthenic acid, ethylhexanoic acid, pivalic acid, versatic acid (a product manufactured by Shell Chemicals, which is a synthetic acid composed of a mixture of isomers of Cio monocarboxylic acid), phenylacetic acid, benzoic acid, 2-naphthoic acid, maleic acid, succnic acid, and the like; a residue of thocarboxylic acid such as hexanethioic acid, 2,2-dimethylbutanethioic acid, decanethioic acid, thiobenzoic acid, and the like; a residue of phosphate ester such as dibutyl phosphate, dipentyl phosphate, dihexyl phosphate, diheptyl phosphate, dioctyl phosphate, bis(2-ethylhexyl) phosphate, bis(1-methylheptyl) phosphate, dilauryl phosphate, dioleoyl phosphate, diphenyl phosphate, bis(p-nonylphenyl) phosphate, bis(polyethylene glycol-p-nonylphenyl) phosphate, (butyl)(2-ethylhexyl) phosphate, (1-methylheptyl)(2-ethylhexyl) phosphate, (2-ethylhexyl)(p-nonylphenyl) phosphate, and the like; a residue of phosphonic ester such as monobutyl (2-ethylhexyl)phosphite, mono-2-ethylhexyl (2-ethylhexyl)phosphite, mono-2-ethylhexyl phenylphosphite, mono-p-nonylphenyl (2-ethylhexyl)phosphite, mono-2-ethylhexyl phosphite, mono-1-methylheptyl phosphite, mono-p-nonylphenyl phosphite, and the like; a residue of phosphinic acid such as dibutyl phophinic acid, bis(2-ethylhexyl)phosphinic acid, bis(1-methylheptyl)phosphinic acid, dilauryl phosphinic acid, dioleoyl phosphinic acid, diphenyl phosphinic acid, bis(p-nonylphenyl)phosphinic acid, butyl(2-ethylhexyl)phosphinic acid, (2-ethylhexyl)(1-methylheptyl)phosphinic acid, (2-ethylhexyl)(p-nonylphenyl)phosphinic acid, butyl phosphinic acid, 2-ethylhexyl phosphinic acid, 1-methylheptyl phosphinic acid, oleoyl phosphinic acid, lauryl phosphinic acid, phenyl phosphinic acid, p-nonylphenyl phosphinic acid, and the like. Either a single type or combination of two or more types of the aforementioned examples may be used as the ligands.

Examples of the Lewis base to be reacted with the rare earth element compound include tetrahydrofuran, diethyl ether, dimethylaniline, trimethylphosphine, lithium chloride, neutral olefins, neutral diolefins, and the like. In this connection, in a case where the rare earth element compound is reacted with a plurality of Lewis bases (i.e. in a case where w = 2 or 3 in formula (IX) and formula (X)), these Lewis bases L¹¹s may be of either the same type or the different types.

The rare earth element compound is preferably a compound represented by general formula (XI) below.

M-(AQ¹) (AQ²) (AQ³) (XI)

(In general formula (XI), M represents an element selected from scandium, yttrium and lanthanoid; AQ¹, AQ² and AQ³ represent functional groups which may be of the same type or different types; "A" represents an element selected from nitrogen, oxygen and sulfur; and the compound essentially includes at least one M-A bond).
Specific examples of the lanthanoid elements include lanthanum, cerium, praseodymium, neodymium, promethium, samarium, europium, gadolinium, terbium, dysprosium, holmium, erbium, thulium, ytterbium, and lutetium. The aforementioned compound is a component capable of improving catalytic activity in the reaction system, reducing reaction time and increasing the reaction temperature.

Gadolinium is preferable as "M" in general formula (XI) in terms of enhancing the catalytic activity and the reaction controllability.

When "A" in general formula (XI) represents nitrogen, examples of the functional group represented by AQ¹, AQ² and AQ³ (i.e. NQ¹, NQ² and NQ³) include amino group and the like. The rare earth element compound has three M-N bonds in this case.

Examples of the amino group include: aliphatic amimo group such as dimethylamino, diethylamimo, diisopropylamino; arylamino group such as phenylamimo, 2,6-di-tert-butylphenylamino, 2,6-diisopropylphenylamino, 2,6-dineopentylphenylamino, 2-tert-butyl-6-isopropylphenylamino, 2-tert-butyl-6-neopentylphenylamino, 2-isopropyl-6-neopentylphenylamino, 2,4,6-tri-tert-butylphenylamino, and the like; and bistrialkylsilylamino group such as bistrimethylsilylamino. Bistrimethylsilylamino group is preferable as the amino group among these examples in terms of solubility to aliphatic hydrocarbon and aromatic hydrocarbon. Either a single type or combination of two or more types of these examples may be used as the amino group.

According to the structural features described above, the component (A-2) can be a compound having three M-N bonds chemically equivalent to each other, whereby the component (A-2) has a stable structure and is easy to handle.
Further, according to the structural features described above, it is possible to further improve catalytic activity in the reaction system, thereby further reducing reaction time and further increasing the reaction temperature.

When "A" in general formula (XI) is oxygen, type of the rare earth element-containing compound represented by general formula (XI), i.e. M-(OQ¹) (OQ²) (OQ³), is not particularly restricted. Examples of the rare earth element-containing compound in this case include:
a rear earth alcoholate represented by general formula (XII) shown below; and

   (RO)₃M (XII)
a rear earth carboxylate represented by general formula (XIII) shown below.

   (R-CO₂)₃M (XIII)
In general formula (XII) and general formula (XIII), "R"s represent C₁₋₁₀ alkyl groups, respectively, which may be of either the same type or different types.

When "A" in general formula (XI) is sulfur, type of the rare earth element-containing compound represented by general formula (XI), i.e. M-(SQ¹) (SQ²) (SQ³), is not particularly restricted. Examples of the rare earth element-containing compound in this case include:
a rear earth alkylthiolate represented by general formula (XIV) shown below; and

   (RS)₃M (XIV)
a compound represented by general formula (XV) shown below.

   (R-CS₂)₃M (XV)
In general formula (XIV) and general formula (XV), "R"s represent C₁₋₁₀ alkyl groups, respectively, which may be of either the same type or different types.

The organic metal compound (B) for use in the catalyst composition is represented by the following general formula (I):

YR¹ₐR²_{b}R³_{c} ... (I)

(In general formula (I), Y represents a metal selected from the group 1, 2, 12 and 13 elements in the periodic table, R¹ and R² each represent a C₁₋₁₀ hydrocarbon group or a hydrogen atom, R³ represents a C₁₋₁₀ hydrocarbon group, R¹, R² and R³ may be of either the same type or different types, a = 1 and b = c = 0 when Y is a metal selected from the group 1 elements in the periodic table, a = b = 1 and c = 0 when Y is a metal selected from the groups 2, 12 elements in the periodic table, and a = b = c = 1 when Y is a metal selected from the group 13 elements in the periodic table.);

In the general formula (I), specific examples of the C₁₋₁₀ hydrocarbon group(s) represented by R¹, R² and R³ include: a normal/branched aliphatic hydrocarbon group such as methyl, ethyl, n-propyl, isopropyl, n-butyl, isobutyl, sec-butyl, tert-butyl, neopentyl, hexyl, octyl group, and the like; an aromatic hydrocarbon group such as phenyl, tolyl, naphthyl group, and the like; an aralkyl group such as benzyl group; and the like. Methyl, ethyl, isobutyl groups and the like are preferable among these examples.

The organic metal component (B) is preferably an organic aluminum compound represented by general formula (XVI):

AlR¹R²R³ ··· (XVI)

(In general formula (XVI), R¹ and R² each represent a C₁₋₁₀ hydrocarbon group or a hydrogen atom and R³ represents a C₁₋₁₀ hydrocarbon group, wherein R¹, R² and R³ may be of either the same type or different types.) The organic aluminum compound corresponds to a compound represented by general formula (I) in which Y is Al and a = b = c = 1.

Examples of the organic aluminum compound represented by general formula (XVI) include trimethylaluminum, triethylaluminum, tri-n-propylaluminum, triisopropylaluminum, tri-n-butylaluminum, triisobutylaluminum, tri-t-butylaluminum, tripentylaluminum, trihexylaluminum, tricyclohexylaluminum, trioctylaluminum; hydrogenated diethylaluminum, hydrogenated di-n-propylaluminum, hydrogenated di-n-butylaluminum, hydrogenated diisobutylaluminum, hydrogenated dihexylaluminum, hydrogenated diisohexylaluminum, hydrogenated dioctylaluminum, hydrogenated diisooctylaluminum, ethylaluminum dihydride, n-propylaluminum dihydride, isobutylaluminum dihydride, and the like. Triethylaluminum, triisobutylaluminum, hydrogenated diethylaluminum and hydrogenated diisobutylaluminum are preferable as the organic aluminum compound among these examples.

Either a single type or combination of two or more types of the aforementioned examples may be used as the organic metal compound (B).
A content of the organic metal compound (B) is preferably 1 to 50 times and more preferably approximately 10 times as much as the content of the rare earth element-containing compound (A) when compared in mol.

The ionic compound (C) which can be used for the catalyst composition is constituted of a non-coordinating anion and a cation. Examples of the ionic compound (C) include an ionic compound or the like capable of being reacted with the rare earth element-containing component (A) and generating a cationic transition metal compound. Examples of the non-coordinating anion include quadrivalent boron anion such as tetraphenylborate, tetrakis(monofluorophenyl)borate, tetrakis(difluorophenyl)borate, tetrakis(trifluorophenyl)borate, tetrakis(tetrafluorophenyl)borate, tetrakis(pentafluorophenyl)borate, tetrakis(tetrafluoromethylphenyl)borate, tetra(tolyl)borate, tetra(xylyl)borate, triphenyl(pentafluorophenyl)borate, [tris(pentafluorophenyl)phenyl]borate, tridecahydride-7,8-dicarbaundecaborate, and the like. Tetrakis(pentafluorophenyl)borate is preferable as the quadrivalent boron anion among these examples.
Examples of the cation include carbonium cation, oxonium cation, amine cation, phosphonium cation, cycloheptatrienyl cation, ferrocenium cation having transition metal, and the like. Specific examples of the carbonium cation include trisubstituted carbonium cation such as triphenylcarbonium cation (which is also referred to as "trityl cation"), tri(substituted phenyl)carbonium cation, and the like. Specific examples of the tri(substituted phenyl)carbonium cation include tri(methylphenyl)carbonium cation, tri(dimethylphenyl)carbonium cation, and the like. Examples of the amine cation include ammonium cation, and the like. Specific examples of ammonium cation include: trialkylammonium cation such as trimethylammonium cation, triethylammonium cation, tripropylammonium cation, tributylammonium cation (e.g. tri(n-butyl)ammonium cation); N,N-dialkylanilinium cation such as N,N-dimethylanilinium cation, N,N-diethylanilinium cation, N,N-2,4,6-pentamethylanilinium cation; dialkylammonium cation such as diisopropylammonium cation, dicyclohexylammonium cation; and the like. Specific examples of phosphonium cation include triarylphosphonium cation such as triphenylphosphonium cation, tri(methylphenyl)phosphonium cation, tri(dimethylphenyl)phosphonium cation, and the like. N,N-dialkylanilinium cation or carbonium cation is preferable and N,N-dialkylanilinium cation is particularly preferable among these examples of the cation.
Accordingly, a compound as a combination of a non-coordinating anion and a cation respectively selected from the aforementioned examples is preferably used as the ionic compound (C). Specifically, N,N-dimethylanilinium tetrakis(pentafluorophenyl)borate, triphenylcarbonium tetrakis(pentafluorophenyl)borate (which is also referred to as "trityl tetrakis(pentafluorophenyl)borate"), and the like are preferable as the ionic compound (C).
Either a single type or combination of two or more types of the aforementioned examples may be used as the ionic compound (C). A content of the ionic compound (C) in the catalyst composition is preferably 0.1 to 10 times, more preferably approximately 1 times, as much as the content of the rare earth element-containing component (A) when compared in mol.

Examples of the halogen compound (D) which can be used for the catalyst composition include: a halogen-containing compound as a Lewis acid (which will occasionally be referred to as "component (D-1)" hereinafter); a complex compound of a metal halide and a Lewis base (which will occasionally be referred to as "component (D-2)" hereinafter); an organic compound containing an active halogen (which will occasionally be referred to as "component (D-3)" hereinafter); and the like. The halogen compound (D) is capable of being reacted with the aforementioned rare earth element-containing compound (A), for example, to generate a cationic transition metal compound, a halide transition metal compound, or a compound of which transition metal center is deficient in charge.

Examples of the component (D-1) include a halogen compound containing a group 3, 4, 5, 6, 8, 13, 14 or 15 element in the periodic table. Preferable examples of the component (D-1) include an aluminum halide and an organic metal halide. Chlorine or bromine is preferable as the halogen element.
Specific examples of the halogen-containing compound as a Lewis acid include methylaluminum dibromide, methylaluminum dichloride, ethylaluminum dibromide, ethylaluminum dichloride, butylaluminum dibromide, butylaluminum dichloride, dimethyl aluminum bromide, dimethylaluminum chloride, diethylaluminum bromide, diethylaluminum chloride, dibutylaluminum bromide, dibutylaluminum chloride, methylaluminum sesquibromide, methylaluminum sesquichloride, ethylaluminum sesquibromide, ethylaluminum sesquichloride, dibutyltin dichloride, aluminum tribromide, tris(pentafluorophenyl)aluminum, tris(pentafluorophenyl)borate, antimony trichloride, antimony pentachloride, phosphorus trichloride, phosphorus pentachloride, tin tetrachloride, titanium tetrachloride, tungsten hexachloride, and the like. Diethylaluminum chloride, ethylaluminum sesquichloride, ethylaluminum dichloride, diethylaluminum bromide, ethylaluminum sesquibromide, and ethylaluminum dibromide are particularly preferable as the component (D-1) among these examples. Either a single type or combination of two or more types of these examples may be used as the component (D-1).

Examples of the metal halide constituting the component (D-2) described above include beryllium chloride, beryllium bromide, beryllium iodide, magnesium chloride, magnesium bromide, magnesium iodide, calcium chloride, calcium bromide, calcium iodide, barium chloride, barium bromide, barium iodide, zinc chloride, zinc bromide, zinc iodide, cadmium chloride, cadmium bromide, cadmium iodide, mercury chloride, mercury bromide, mercury iodide, manganese chloride, manganese bromide, manganese iodide, rhenium chloride, rhenium bromide, rhenium iodide, copper chloride, copper iodide, silver chloride, silver bromide, silver iodide, gold chloride, gold iodide, gold bromide, and the like. Magnesium chloride, calcium chloride, barium chloride, manganese chloride, zinc chloride and copper chloride are preferable as the metal halide among these examples. Magnesium chloride, manganese chloride, zinc chloride and copper chloride are particularly preferable.
Further, preferable examples of the Lewis base constituting the component (D-2) include a phosphorus compound, a carbonyl compound, a nitrogen compound, an ether compound, alcohol, and the like. Specifically, acceptable examples of the Lewis base include tributyl phosphate, tris (2-ethylhexyl) phosphate, triphenyl phosphate, tricresyl phosphate, triethylphosphine, tributylphosphine, triphenylphosphine, diethylphosphinoethane, diphenylphosphinoethane, acetylacetone, benzoylacetone, propionitrileacetone, valerylacetone, ethylacetylacetone, methyl acetoacetate, ethyl acetoacetate, phenyl acetoacetate, dimethyl malonate, diethyl malonate, diphenyl malonate, acetic acid, octanoic acid, 2-ethyl-hexanoic acid, oleic acid, stearic acid, benzoic acid, naphthenic acid, versatic acid, triethylamine, N,N-dimethylacetoamide, tetrahydrofuran, diphenyl ether, 2-ethyl-hexyl alcohol, oleyl alcohol, stearyl alcohol, phenol, benzyl alcohol, 1-decanol, lauryl alcohol, and the like. Tris (2-ethylhexyl) phosphate, tricresyl phosphate, acetylacetone, 2-ethyl-hexanoic acid, versatic acid, 2-ethyl-hexyl alcohol, 1-decanol, and lauryl alcohol are preferable as the Lewis base among these examples.
0.01 to 30 mol (preferably 0.5 to 10 mol) per 1 mol of the metal halide, of the aforementioned Lewis base, is reacted with the metal halide. Metals remaining in the copolymer can be reduced by using a reactant thus obtained by the reaction between the metal halide and the Lewis base.
Either a single type or combination of two or more types of the aforementioned examples may be used as the component (D-2).

Examples of the component (D-3) described above include benzyl chloride and the like.

Either a single type or combination of two or more types of the examples thereof may be used as the halogen compound (D).

A content of the halogen compound (D) in the catalyst composition is preferably 0 to 5 times, more preferably 1 to 5 times, as much as the content of the rare earth element-containing component (A) when compared in mol.

In the first method for manufacturing a copolymer of the present disclosure, the compound (E) for use in the catalyst composition is selected from the group consisting of a non-conjugated olefin compound and a conjugated diene compound. Accordingly, in the first method for manufacturing a copolymer of the present disclosure, it is possible by using the compound (E) in the catalyst composition to reduce endothermic energy at the endothermic peak in the range of 100 °C to 150 °C determined by DSC measurement, of the resulting copolymer, and thus decrease a degree of crystallinity derived from the non-conjugated olefin unit in the range of 100 °C to 150 °C measured by DSC.
In the second method for manufacturing a copolymer of the present disclosure, the compound (E') for use in the catalyst composition is selected from the group consisting of a non-conjugated olefin compound and a conjugated diene compound which are different in types from the non-conjugated olefin compound and the conjugated diene compound as monomers to be copolymerized in the copolymerization process. Accordingly, in the second method for manufacturing a copolymer of the present disclosure, it is possible by using the compound (E') in the catalyst composition to reduce endothermic energy at the endothermic peak in the range of 100 °C to 150 °C determined by DSC measurement, of the resulting copolymer, and thus decrease a degree of crystallinity derived from the non-conjugated olefin unit in the range of 100 °C to 150 °C measured by DSC.

The non-conjugated olefin compound for use in the catalyst composition represents an aliphatic unsaturated hydrocarbon compound having one or more carbon-carbon double bond. Examples of the non-conjugated olefin compound include an acyclic non-conjugated olefin compound and a cyclic non-conjugated olefin compound. Examples of the acyclic non-conjugated olefin compound include α-olefin such as propylene, 1-butene, 1-pentene, 1-hexene, 1-heptene, 1-octene, and the like.
Examples of the cyclic non-conjugated olefin compound include: cycloalkene such as cyclopentene, cyclohexene, cycloheptene, cyclooctene, methylcyclopentene, methylcyclohexene, methylcycloheptene, methylcyclooctene, ethylcyclopentene, ethylcyclohexene, ethylcycloheptene, ethylcyclooctene, dimethylcyclopentene, dimethylcyclohexene, dimethylcycloheptene, dimethylcyclooctene; and a compound having a crosslinking structure such as norbornene (which is occasionally referred to as "2-norbornene"), 5-methyl-2-norbornene, 5-ethyl-2-norbornene, 5-n-butyl-2-norbornene, 5-n-hexyl-2-norbornene, 5-n-decyl-2-norbornene, 5-cyclohexyl-2-norbornene, 5-ethylidene-2-norbornene, 5-vinyl-2-norbornene, 5-phenyl-2-norbornene, 5-benzyl-2-norbornene, dicyclopentadiene, methyldicyclopentadiene, ethyldicyclopentadiene, and the like.
Norbornene and dicyclopentadiene are preferable among these examples as the non-conjugated olefin compound for use in the catalyst composition. Norbornene and dicyclopentadiene are not easily incorporated into the copolymer, whereby it is possible by using norbornene and dicyclopentadiene to further reduce endothermic energy at the endothermic peak in the range of 100 °C to 150 °C determined by DSC measurement, of the resulting copolymer, and thus further decrease a degree of crystallinity derived from the non-conjugated olefin unit in the range of 100 °C to 150 °C measured by DSC.

Examples of the conjugated diene compound for use in the catalyst composition include 1,3-butadiene, isoprene, 1,3-pentadiene, 2,3-dimethylbutadiene, and the like. 1,3-butadiene and isoprene are preferable and 1,3-butadiene is particularly preferable among these examples. When 1,3-butadiene is used as the compound (E), 1,3-butadiene is thoroughly incorporated into the catalyst composition due to the aging process, whereby 1,3-butadiene is not incorporated into the copolymer in the copolymerization process and therefore it is possible to further reduce endothermic energy at the endothermic peak in the range of 100 °C to 150 °C determined by DSC measurement, of the resulting copolymer, and thus further decrease a degree of crystallinity derived from the non-conjugated olefin unit in the range of 100 °C to 150 °C measured by DSC.

A cyclic non-conjugated olefin compound is preferable as the compound (E) or the compound (E'). A cyclic non-conjugated olefin compound is only poorly integrated into the copolymer, in particular, whereby it is possible by using a cyclic non-conjugated olefin compound to further reduce endothermic energy at the endothermic peak in the range of 100 °C to 150 °C determined by DSC measurement, of the resulting copolymer, and thus further decrease a degree of crystallinity derived from the non-conjugated olefin unit in the range of 100 °C to 150 °C measured by DSC.

A non-conjugated olefin compound having three or more carbon atoms is also preferable as the compound (E) or the compound (E'). A non-conjugated olefin compound having three or more carbon atoms is not easily incorporated into the copolymer, either, whereby it is possible by using the cyclic non-conjugated olefin compound to further reduce endothermic energy at the endothermic peak in the range of 100 °C to 150 °C determined by DSC measurement, of the resulting copolymer, and thus further decrease a degree of crystallinity derived from the non-conjugated olefin unit in the range of 100 °C to 150 °C measured by DSC.

In a case where the compound (E) or the compound (E') is a non-conjugated olefin compound, a content of the compound (E) or the compound (E') in the catalyst composition is preferably at least 10 times, more preferably 50 to 10,000 times, as much as the content of the rare earth element-containing compound (A) when compared in mol. In a case where the compound (E) or the compound (E') is a conjugated diene compound, a content of the compound (E) or the compound (E') in the catalyst composition is preferably at least 1 times, more preferably 3 to 1,000 times, as much as the content of the rare earth element-containing compound (A) when compared in mol. When the content of the compound (E) or the compound (E') is set to be within the aforementioned ranges, the compound (E) or the compound (E') can cause its superior effect in a satisfactory manner, whereby it is possible to further reduce endothermic energy at the endothermic peak in the range of 100 °C to 150 °C determined by DSC measurement, of the resulting copolymer, and thus further decrease a degree of crystallinity derived from the non-conjugated olefin unit in the range of 100 °C to 150 °C measured by DSC.

The catalyst composition may further include aluminoxane (F). The aluminoxane (F) is a compound obtained by bringing an organic aluminum compound into contact with a condensing agent. It is possible by using the aluminoxane (F) to i) further improve catalytic activity in the polymerization reaction system, so that the target copolymer can be easily obtained and ii) further reduce reaction time and increase the reaction temperature.

Examples of the organic aluminum compound described above include trialkylaluminum such as trimethylaluminum, triethylaluminum, triisobutylaluminum, and a mixture thereof. Trimethylaluminum and a mixture of trimethylaluminum and tributylaluminum are preferable among these examples as the organic aluminum compound.
Examples of the condensing agent include water and the like.

Examples of the aluminoxane (F) include aluminoxane represented by following general formula (XVII):

-(Al(R⁷)O)ₙ- ··· (XVII)

(In general formula (XVII), R⁷ represents a C₁₋₁₀ hydrocarbon group; some of the hydrocarbon groups may be substituted with halogen atom and/or alkoxy group; respective R⁷s may be of either the same type or different types among the repeating units; and n is preferably ≥ 5).
The molecular structure of the aluminoxane described above may be either linear or cyclic.
It is preferable that "n" in the general formula (XVII) is ≥ 10.
Further, examples of the hydrocarbon group as R⁷ in the general formula (XVII) include methyl, ethyl, propyl, isobutyl group, and the like. Methyl group is particularly preferable among these examples. Either a single type or combination of two or more types of these examples may be used as the hydrocarbon group. Methyl group and isobutyl group in combination are preferably used as the hydrocarbon group or R⁷ in the general formula (XVII) in this regard.
It is preferable that the aforementioned aluminoxane has high solubility to an aliphatic hydrocarbon and low solubility to an aromatic hydrocarbon. Preferable examples of the aluminoxane include commercially available aluminoxane sold in the form of a hexane solution.
Examples of the aliphatic hydrocarbon include hexane, cyclohexane, and the like.

Acceptable examples of the aluminoxane (F) include in particular a modified aluminoxane represented by general formula (XVIII) (which particular modified aluminoxane will occasionally be referred to as "TMAO" hereinafter).

-(Al(CH₃)ₓ(i-C₄H₉)_{y}O)ₘ- ··· (XVIII)

(In general formula (XVIII), x + y = 1; "m" is ≥ 5.)
Examples of TMAO include that having a product name "TMAO-341" manufactured by Tosoh Finechem Corporation.

Specifically, the aluminoxane (F) may be a modified aluminoxane represented by general formula (XIX) (which specific modified aluminoxane will occasionally be referred to as "MMAO" hereinafter).

-(Al(CH₃)_{0.7}(i-C₄H₉)_{0.3}O)ₖ- ··· (XIX)

(In general formula (XIX), "k" is ≥ 5.)
Examples of MMAO include that having a product name "MMAO-3A" manufactured by Tosoh Finechem Corporation.

Alternatively, acceptable examples of the aluminoxane (F) include in particular a modified aluminoxane represented by general formula (XX) (which particular modified aluminoxane will occasionally be referred to as "PMAO" hereinafter).

-[(CH₃)AlO]ᵢ ··· (XX)

(In general formula (XX), "i" is ≥ 5.)
Examples of PMAO include that having a product name "PMAO-211" manufactured by Tosoh Finechem Corporation.

The aluminoxane (F) is preferably MMAO or TMAO in terms of improving a catalytic activity-enhancing effect and more preferably TMAO, in particular, in terms of further improving the catalytic activity-enhancing effect among MMAO, TMAO and TMAO described above.

The first method for manufacturing a copolymer of the present disclosure includes a process of aging a catalyst composition (which process will occasionally be referred to as the "aging process" hereinafter), the catalyst composition containing a rare earth element-containing compound (A), an organic metal compound (B), at least one compound selected from the group consisting of an ionic compound (C) and a halogen compound (D), and at least one compound (E) selected from the group consisting of a non-conjugated olefin compound and a conjugated diene compound. Details of the aging process are not particularly restricted and the catalyst composition containing the rare earth element-containing compound (A), the organic metal compound (B), a compound selected from the ionic compound (C) and the halogen compound (D), and the compound (E) may be either simply left or stirred. The aging process may include heating the catalyst composition. The temperature in the aging process is preferably in the range of 0 °C to 100 °C and more preferably in the range of 10 °C to 80 °C. The time period of the aging process is not particularly restricted and may be, for example, in the range of 1 second to 1,000 hours, preferably in the range of 10 second to 500 hours, and more preferably in the range of 5 minutes to 300 hours.

The first/second method for manufacturing a copolymer of the present disclosure includes a process of copolymerizing a non-conjugated olefin compound and a conjugated diene compound as monomers under the presence of the aforementioned catalyst composition (which process will occasionally be referred to as "the copolymerization process" hereinafter). In a case where the copolymer is to contain an aromatic vinyl unit, as well, the non-conjugated olefin compound, the conjugated diene compound and an aromatic vinyl compound as monomers are copolymerized under the presence of the aforementioned catalyst composition in the copolymerization process. The first/second method for manufacturing a copolymer of the present disclosure may further include, in addition to the copolymerization process, coupling process, rinsing process and other processes according to necessity.

Any polymerization method such as solution polymerization, suspension polymerization, liquid-phase bulk polymerization, emulsion polymerization, vapor-phase polymerization, or solid-phase polymerization can be used for the copolymerization process. In a case where a solvent is used in a relevant copolymerization reaction, any solvent is acceptable as long as the solvent is inactive in the copolymerization reaction. Examples of the solvent include toluene, hexane (e.g. cyclohexane, n-hexane), and the like.

In the first/second method for manufacturing a copolymer of the present disclosure, the copolymerization process may be carried out by either a single step or multiple (i.e. two or more) steps. The copolymerization process carried out by a single step represents a process of effecting copolymerization by bringing all monomers to be polymerized to simultaneous reactions. The copolymerization process carried out by multiple steps represents a process of effecting copolymerization by first bringing a portion/all of one/two or more monomer(s) to reactions, to form a polymer or copolymer (the first polymerization step), and then adding the remaining portion(s) of the first polymerization step monomer(s) and the remaining type of monomer(s) which have not been used in the first polymerization step, to the polymer or copolymer thus formed, to complete copolymerization (the second polymerization step to the final polymerization step).

It is possible, under the presence of the catalyst composition described above, to control bond contents (cis-1,4 bond content, trans-1,4 bond content, 3,4 vinyl bond content, and 1,2 vinyl content) in the entire conjugated diene units of the copolymer thus manufactured and contents of the units derived from the respective monomers (that is, copolymerization ratios of the respective monomers) by controllably changing the charging order and charging amounts of the respective monomers when they are charged into a reaction vessel, and other reaction conditions.

In the second method for manufacturing a copolymer of the present disclosure, the copolymerization process preferably includes charging the compound (E') into a reaction vessel at the stage of charging the conjugated diene compound as a monomer into the reaction vessel for the first time. It is possible to maximize an effect caused by the compound (E') and make chain lengths of the non-conjugated olefin units satisfactorily short by charging the compound (E') into a reaction vessel at the stage of charging the conjugated diene compound as a monomer into the reaction vessel for the first time. In this regard, charging of the non-conjugated olefin compound as a monomer into the reaction vessel may be carried out at any of the following stages: before charging the conjugated diene compound as a monomer into the reaction vessel for the first time; after charging the conjugated diene compound as a monomer into the reaction vessel for the first time; when (i.e. simultaneous with) charging the conjugated diene compound as a monomer into the reaction vessel for the first time. Further, in a case where an aromatic vinyl compound is used, charging of the aromatic vinyl compound into the reaction vessel may be carried out at any of the following stages: before charging the conjugated diene compound as a monomer into the reaction vessel for the first time; after charging the conjugated diene compound as a monomer into the reaction vessel for the first time; when (i.e. simultaneous with) charging the conjugated diene compound as a monomer into the reaction vessel for the first time.

In the first/second method for manufacturing a copolymer of the present disclosure, the copolymerization process is preferably carried out in an atmosphere of inert gas, desirably in an atmosphere of nitrogen gas or argon gas. The temperature in the polymerization process, although it is not particularly restricted, is preferably in the range of -100 °C to 200 °C and may be around the room temperature, for example. Too high reaction temperature may adversely affect selectivity of cis-1,4 bond of the conjugated diene unit of the copolymer. Pressure during the copolymerization process is preferably in the range of 0.1 MPa to 10.0 MPa in terms of capturing a sufficient amount of an acyclic non-conjugated olefin compound into the copolymerization reaction system. Reaction time of the copolymerization process is preferably in the range of 1 second to 10 days, for example, although it is not particularly restricted. The reaction time may be appropriately set depending on conditions such as a micro structure desired for the resulting copolymer, types of the respective monomers, charging amounts and charging order of the monomers, type of the catalyst, reaction temperature, and the like. The copolymerization reaction can be stopped by using a polymerization terminator such as methanol, ethanol, isopropanol in the copolymerization process.

The coupling process is a process of carrying out a reaction (a coupling reaction) for modifying at least a portion, e.g. a terminal end, of a polymer chain of the copolymer obtained by the copolymerization process described above. The coupling reaction is preferably carried out when a conversion ratio in the copolymerization reaction has reached 100 %.
Type of a coupling agent for use in the coupling reaction is not particularly restricted and can be appropriately selected according to the purpose. Examples of the coupling agent include: (i) a tin-containing compound such as bis(maleic acid-1-octadecyl)dioctyl tin (IV); (ii) an isocyanate compound such as 4,4'-diphenylmethane diisocyanate; (iii) an alkoxysilane compound such as glycidyl propyltrimethoxysilane; and the like. Either a single type or combination of two or more types of these examples may be used as the coupling agent. Bis(maleic acid-1-octadecyl)dioctyl tin (IV) is preferable as the coupling agent among these examples in terms of high reaction efficiency and relatively little gel generation.

Rinsing process is a process of rinsing a copolymer obtained by the aforementioned copolymerization process. Type of a solvent for use in the rinsing process is not particularly restricted and can be appropriately selected according to the purpose. Examples of the solvent include methanol, ethanol, isopropanol, and the like. An acid (such as hydrochloric acid, sulfuric acid, nitric acid) may be added, for use, to such a solvent as described above in the rinsing process when a Lewis acid-derived catalyst is used as the polymerization catalyst, in particular. An amount to be added, of the acid, is preferably 15 mol % or less with respect to the solvent. Addition of the acid by an amount exceeding 15 mol % with respect to the solvent may cause the acid to remain in the copolymer, possibly adversely affecting a mixing and kneading process and a vulcanization reaction. An amount of catalyst residue in the copolymer can be reduced to an appropriate level by the rinsing process.

### < Rubber composition >

A rubber composition of the present disclosure characteristically includes the aforementioned copolymer. The rubber composition of the present disclosure, having high wear resistance and high crack growth resistance, can decrease rolling resistance of a tire when it is applied to the tire.
The rubber composition of the present disclosure includes the aforementioned copolymer as a rubber component and optionally may further include other rubber components, a filler, a crosslinking agent and other components.

A content of the copolymer in the rubber component of the rubber composition of the present disclosure is preferably in the range of 10 to 100 mass %, more preferably in the range of 20 to 100 mass %, and further more preferably in the range of 30 to 100 mass %. When a content of the copolymer in the rubber component of the rubber composition is ≥ 10 mass %, the anticipated effect by the copolymer will be fully demonstrated, whereby wear resistance and crack growth resistance of the rubber composition further improve and rolling resistance of a tire further decreases when the rubber composition is applied to the tire.

Types of rubber components other than the copolymer of the present disclosure are not particularly restricted and can be appropriately selected according to the purpose. Examples of other rubber components include natural rubber (NR), polyisoprene rubber (IR), polybutadiene rubber (BR), acrylonitrile-butadiene rubber (NBR), chloroprene rubber, ethylene-propylene rubber (EPM), ethylene-propylene-nonconjugated diene rubber (EPDM), polysulfide rubber, silicone rubber, flurorubber, urethane rubber, and the like. Either a single type or combination of two or more types of these examples may be used as the other rubber components.

The rubber composition can improve reinforcing properties thereof by including a filler therein. Type of the filler is not particularly restricted and examples thereof include carbon black, silica, aluminum hydroxide, clay, alumina, talc, mica, kaolin, glass balloons, glass beads, calcium carbonate, magnesium carbonate, magnesium hydroxide, magnesium oxide, titanium oxide, potassium titanate, barium sulfate, and the like. Carbon black is preferably used among these examples. Either a single type or combination of two or more types of these examples may be used as the filler.
A content of the filler, although it is not particularly restricted and appropriately selected according to the purpose, is preferably 10 to 100 parts by mass, more preferably 20 to 80 parts by mass, and most preferably 30 to 60 parts by mass, with respect to 100 parts by mass of the rubber component. The content of filler, of ≥ 10 parts by mass with respect to 100 parts by mass of the rubber component, ensures an effect of improving the reinforcing property of the rubber composition by the filler. The content of filler, of ≤ 100 parts by mass with respect to 100 parts by mass of the rubber component, ensures good workability of the rubber composition.

Type of the crosslinking agent is not particularly restricted and can be appropriately selected according to the purpose. Examples of the crosslinking agent include sulfur-based crosslinking agent, organic peroxide-based crosslinking agent, inorganic crosslinking agent, polyamine crosslinking agent, resin crosslinking agent, sulfur compound-based crosslinking agent, oxime-nitrosamine-based crosslinking agent, and the like. Sulfur-based crosslinking agent (sulfur-based vulcanizing agent) is preferably applied to a rubber composition for a tire among these examples.
A content of the crosslinking agent is not particularly restricted and can be appropriately selected according to the purpose but is preferably in the range of 0.1 to 20 parts by mass with respect to 100 parts by mass of the rubber component.

A vulcanization accelerator may be used in combination with the vulcanizing agent. Examples of the vulcanization accelerator include guanidine based, aldehyde-amine based, aldehyde-ammonium based, thiazole based, sulfonamide based, thiourea based, thiuram based, dithiocarbamate based, xanthate based compounds, and the like.

Further, other known additives such as a softener, a vulcanization accelerator aid, a coloring agent, a fire retardant, a lubricant, a foaming agent, a plasticizer, a processing aid, an antioxidant, an antiaging agent, a scorch protection agent, a UV protection agent, an antistatic agent, an anticoloring agent, and the like may optionally be used in the rubber composition of the present disclosure according to the applications.

The rubber composition of the present disclosure is applicable to, other than a tire described below, a rubber damper, quake-absorbing rubber, a belt such as a conveyor belt, a rubber crawler, hoses of various types, and the like.

### <Tire >

A tire of the present disclosure characteristically employs the aforementioned rubber composition. The tire of the present disclosure therefore exhibits high wear resistance and high crack growth resistance, as well as low rolling resistance.
A portion of a tire to which the rubber composition of the present disclosure is to be applied is not particularly limited and the tire portion can be appropriately selected according to the purpose. Examples of the tire portion include a tread, a base tread, a sidewall, side reinforcing rubber, a bead filler, and the like.

The tire of the present disclosure can be manufactured by a conventional method. For example, a desired tire such as a pneumatic tire can be manufactured by: sequentially laminating members generally for use in tire production such as a carcass layer, a belt layer, a tread layer made of the unvulcanized rubber composition and/or cords on a tire building drum; removing the drum, to obtain a green tire; and subjecting the green tire to heating and vulcanization according to the conventional method.

### EXAMPLES

The present disclosure will be described further in detail by Examples hereinafter. The present disclosure is not restricted by any means by these Examples.

### (Comparative Example 1)

Copolymer "a" was synthesized by: charging 75 g of styrene, 8 g of a toluene solution containing 2 g of 1,3-butadiene, and 654 g of toluene into a thoroughly dry 2000 mL pressure-resistant stainless reactor;
charging, on the other hand, 0.075 mmol of ((1-benzyldimethylsilyl -3-methyl)indenyl)bis(bis(dimethylsilyl)amide) gadolinium complex {(1-BnMe₂Si-3-Me)C₉H₅Gd[N(SiHMe₂)₂]₂}, 0.083 mmol of N,N-dimethylanilinium tetrakis(pentafluorophenyl)borate [Me₂NHPhB(C₆F₅)₄], and 0.35 mmol of disobutylaluminum hydride into a glass vessel in a glovebox under nitrogen atmosphere and dissolving the substances in 30 g of toluene, to obtain a catalyst solution;
adding the catalyst solution thus obtained, to the pressure-resistant stainless reactor, and heating the mixture in the reactor to 60 °C;
then adding ethylene to the pressure-resistant stainless reactor at pressure of the ethylene: 1.5 MPa and carrying out copolymerization at 75 °C for 4 hours in total by charging 8 g of a toluene solution containing 2 g of 1,3-butadiene, i.e. 1,3-butadiene, every 24 minutes such that 80 g of a toluene solution containing 20 g of 1,3-butadiene in total was charged;
stopping the copolymerization reaction by adding an isopropanol solution (1 mL) of 5 mass % 2,2-methylene-bis(4-ethyl-6-t-butylphenol) (NS-5) to the pressure-resistant stainless reactor; and
isolating a copolymer by using a large amount of methanol and vacuum-drying the resulting copolymer at 50 °C, thereby obtaining Copolymer a.

### (Example 1)

Copolymer A was synthesized by: charging 145 g of styrene, 50 g of 2-norbornene, 140 g of a toluene solution containing 34 g of 1,3-butadiene, and 380 g of toluene into a thoroughly dry 2000 mL pressure-resistant stainless reactor;
charging, on the other hand, 0.150 mmol of mono(1,3-bis(tertbutyldimethylsilyl)indenyl) gadolinium bis(bis(dimethylsilyl)amide) complex {1,3-(t-BuMe₂Si)₂C₉H₅Gd[N(SiHMe₂)₂]₂}, 0.150 mmol of trityl tetrakis(pentafluorophenyl)borate [Ph₃CB(C₆F₅)₄], and 1.5 mmol of triisobutylaluminum into a glass vessel in a glovebox under nitrogen atmosphere and dissolving the substances in 95 mL of toluene, to obtain a catalyst solution;
adding the catalyst solution thus obtained, to the pressure-resistant stainless reactor, and heating the mixture in the reactor to 75 °C;
then adding ethylene to the pressure-resistant stainless reactor at pressure of the ethylene: 1.5 MPa and carrying out copolymerization at 75 °C for 4 hours in total;
stopping the copolymerization reaction by adding an isopropanol solution (1 mL) of 5 mass % 2,2-methylene-bis(4-ethyl-6-t-butylphenol) (NS-5) to the pressure-resistant stainless reactor; and
isolating a copolymer by using a large amount of methanol and vacuum-drying the resulting copolymer at 50 °C, thereby obtaining Copolymer A.

### (Example 2)

Copolymer B was synthesized by: charging 127 g of styrene, 75 g of 2-norbornene, 140 g of a toluene solution containing 34 g of 1,3-butadiene, and 372 g of toluene into a thoroughly dry 2000 mL pressure-resistant stainless reactor;
charging, on the other hand, 0.150 mmol of mono(1,3-bis(tertbutyldimethylsilyl)indenyl) gadolinium bis(bis(dimethylsilyl)amide) complex {1,3-(t-BuMe₂Si)₂C₉H₅Gd[N(SiHMe₂)₂]₂}, 0.150 mmol of trityl tetrakis(pentafluorophenyl)borate [Ph₃CB(C₆F₅)₄], and 1.5 mmol of triisobutylaluminum into a glass vessel in a glovebox under nitrogen atmosphere and dissolving the substances in 95 mL of toluene, to obtain a catalyst solution;
adding the catalyst solution thus obtained, to the pressure-resistant stainless reactor, and heating the mixture in the reactor to 75 °C;
then adding ethylene to the pressure-resistant stainless reactor at pressure of the ethylene: 1.5 MPa and carrying out copolymerization at 75 °C for 4 hours in total;
stopping the copolymerization reaction by adding an isopropanol solution (1 mL) of 5 mass % 2,2-methylene-bis(4-ethyl-6-t-butylphenol) (NS-5) to the pressure-resistant stainless reactor; and
isolating a copolymer by using a large amount of methanol and vacuum-drying the resulting copolymer at 50 °C, thereby obtaining Copolymer B.

### (Example 3)

Copolymer C was synthesized by: charging 145 g of styrene, 140 g of a toluene solution containing 34 g of 1,3-butadiene, and 430 g of toluene into a thoroughly dry 2000 mL pressure-resistant stainless reactor;
charging, on the other hand, 0.150 mmol of mono(1,3-bis(tertbutyldimethylsilyl)indenyl) gadolinium bis(bis(dimethylsilyl)amide) complex {1,3-(t-BuMe₂Si)₂C₉H₅Gd[N(SiHMe₂)₂]₂}, 0.150 mmol of trityl tetrakis(pentafluorophenyl)borate [Ph₃CB(C₆F₅)₄], and 1.5 mmol of triisobutylaluminum into a glass vessel in a glovebox under nitrogen atmosphere, adding 95 mL of toluene and then 0.08 g of 1,3-butadiene (10 equivalent weights with respect to Gd) to the substances in the glass vessel, and aging the mixture at the room temperature (23 °C) for 30 minutes, to obtain a catalyst solution;
adding the catalyst solution thus obtained, to the pressure-resistant stainless reactor, and heating the mixture in the reactor to 75 °C;
then adding ethylene to the pressure-resistant stainless reactor at pressure of the ethylene: 1.5 MPa and carrying out copolymerization at 75 °C for 4 hours in total;
stopping the copolymerization reaction by adding an isopropanol solution (1 mL) of 5 mass % 2,2-methylene-bis(4-ethyl-6-t-butylphenol) (NS-5) to the pressure-resistant stainless reactor; and
isolating a copolymer by using a large amount of methanol and vacuum-drying the resulting copolymer at 50 °C, thereby obtaining Copolymer C.

### (Example 4)

Copolymer D was synthesized by: charging 118 g of styrene and 473 g of toluene into a thoroughly dry 2000 mL pressure-resistant stainless reactor;
charging, on the other hand, 0.090 mmol of mono(1,3-bis(tertbutyldimethylsilyl)indenyl) gadolinium bis(bis(dimethylsilyl)amide) complex {1,3-(t-BuMe₂Si)₂C₉H₅Gd[N(SiHMe₂)₂]₂}, 0.090 mmol of N,N-dimethylanilinium tetrakis(pentafluorophenyl)borate [Me₂HNPhB(C₆F₅)₄], and 0.27 mmol of triisobutylaluminum into a glass vessel in a glovebox under nitrogen atmosphere, adding 57 mL of toluene to the mixture in the glass vessel, and aging the mixture in the glass vessel at the room temperature (23 °C) for 16 hours, to obtain a catalyst solution;
adding the catalyst solution thus obtained, to the pressure-resistant stainless reactor, and heating the mixture in the reactor to 75 °C;
then adding ethylene to the pressure-resistant stainless reactor at pressure of the ethylene: 1.5 MPa and carrying out copolymerization at 75 °C for 4 hours in total by adding 102 g of a toluene solution containing 26 g of 1,3-butadiene, i.e. 1,3-butadiene, continuously at the rate of 0.3-0.4 mL/minute to the reactor;
stopping the copolymerization reaction by adding an isopropanol solution (1 mL) of 5 mass % 2,2-methylene-bis(4-ethyl-6-t-butylphenol) (NS-5) to the pressure-resistant stainless reactor; and
isolating a copolymer by using a large amount of methanol and vacuum-drying the resulting copolymer at 50 °C, thereby obtaining Copolymer D.

### (Example 5)

Copolymer E was synthesized by: charging 30 g of styrene and 500 g of toluene into a thoroughly dry 2000 mL pressure-resistant stainless reactor;
charging, on the other hand, 0.090 mmol of mono(1,3-bis(tertbutyldimethylsilyl)indenyl) neodymium bis(bis(dimethylsilyl)amide) complex {1,3-(t-BuMe₂Si)₂C₉H₅Nd[N(SiHMe₂)₂]₂}, 0.090 mmol of N,N-dimethylanilinium tetrakis(pentafluorophenyl)borate [Me₂HNPhB(C₆F₅)₄], and 0.45 mmol of triisobutylaluminum into a glass vessel in a glovebox under nitrogen atmosphere, adding 38 mL of toluene to the mixture in the glass vessel, and aging the mixture in the glass vessel at the room temperature (23 °C) for 16 hours, to obtain a catalyst solution;
adding the catalyst solution thus obtained, to the pressure-resistant stainless reactor, and heating the mixture in the reactor to 75 °C;
then adding ethylene to the pressure-resistant stainless reactor at pressure of the ethylene: 1.5 MPa and carrying out copolymerization at 75 °C for 4 hours in total by adding 220 g of a toluene solution containing 55 g of 1,3-butadiene, i.e. 1,3-butadiene, continuously at the rate of 0.6-0.8 mL/minute;
stopping the copolymerization reaction by adding an isopropanol solution (1 mL) of 5 mass % 2,2-methylene-bis(4-ethyl-6-t-butylphenol) (NS-5) to the pressure-resistant stainless reactor; and
isolating a copolymer by using a large amount of methanol and vacuum-drying the resulting copolymer at 50 °C, thereby obtaining Copolymer E.

### (Analysis of Copolymers)

The number average molecular weight (Mn), the weight average molecular weight (Mw), the molecular weight distribution (Mw/Mn), respective contents (mol %) of ethylene unit, butadiene unit and styrene unit, a degree of crystallinity, the melting point, endothermic energy at the endothermic peak, and the glass transition temperature were measured, respectively, for each of the copolymers thus obtained, by the methods described below.

### < Number average molecular weight (Mn), weight average molecular weight (Mw), and molecular weight distribution (Mw/Mn) >

The number average molecular weight (Mn), the weight average molecular weight (Mw), and the molecular weight distribution (Mw/Mn) in terms of polystyrene standard were determined, respectively, for each of the copolymers, relative to monodisperse polystyrene as a standard reference material, by using gel permeation chromatography [GPC: HLC-8321GPC/HT manufactured by Tosoh Corporation, column: HT-806M × 2 manufactured by SHOWA DENKO K.K., detector: a differential refractive index detector (RI)]. The measurement temperature was 140 °C.

### < Contents of ethylene unit, butadiene unit and styrene unit >

Contents (mol %) of ethylene unit, butadiene unit and styrene unit in each of the copolymers were determined from integration ratios of respective peaks in ¹H-NMR spectrum (100 °C, d-tetrachloroethane reference: 6 ppm).
Specifically, contents (mol %) of ethylene unit, butadiene unit and styrene unit in the copolymer were determined, respectively, based on the integration ratios of: aromatic hydrogen derived from styrene unit of the copolymer (5H: 7.4-6.4 ppm); olefin hydrogen derived from 1,4-bond butadiene unit of the copolymer (2H: 5.3-5.5 ppm); and respective aliphatic hydrogens of the copolymer (styrene (3H) + butadiene (4H) + ethylene (1H): 1.4-2.4 ppm). The results are shown in Table 1.

### < Degree of crystallinity >

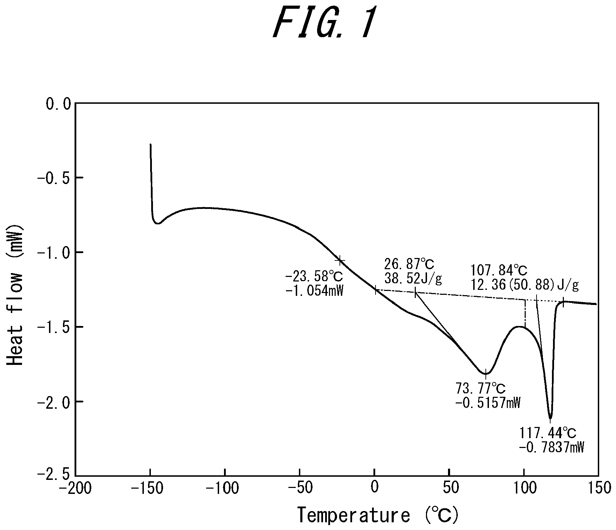

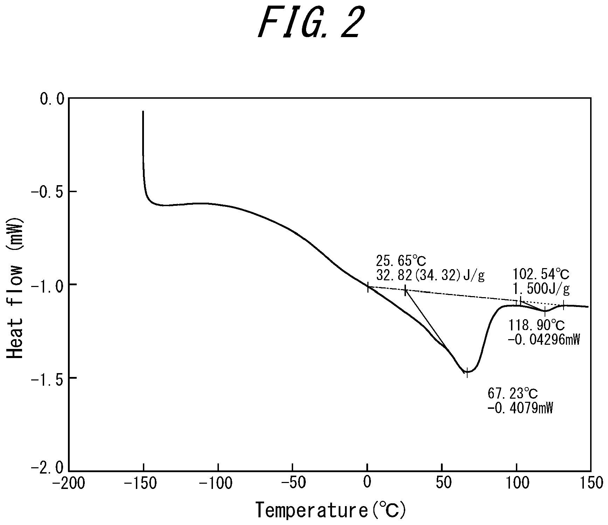

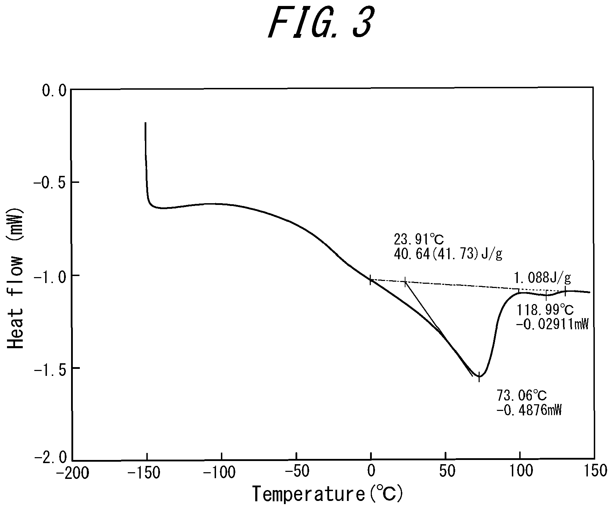

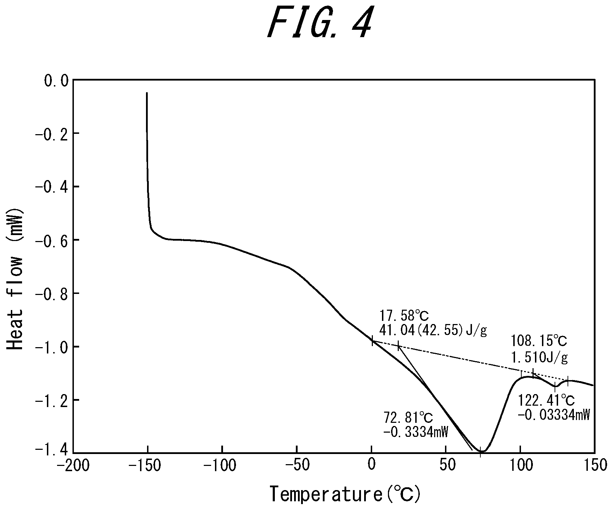

A sample was heated for each of the copolymers from -150 °C to 150 °C at a temperature-increasing rate of 10 °C/minute, so that an endothermic peak energy (endothermic energy at the endothermic peak) (ΔH₁) in the range of 0 °C to 100 °C and an endothermic peak energy (ΔH₂) in the range of 100 °C to 150 °C, of the copolymer, were measured, respectively.
Further, crystal melting energy (ΔH₀) of polyethylene having a crystal component ratio: 100 % was measured in a manner similar to the measurement of ΔH₁ and ΔH₂.
A degree of crystallinity (%) derived from ethylene unit (non-conjugated olefin unit) in the range of 0 °C to 100 °C was calculated from a ratio (ΔH₁/ΔH₀) of the endothermic peak energy (ΔH₁) in the range of 0 °C to 100 °C of the copolymer with respect to the crystal melting energy (ΔH₀) of the polyethylene. Yet further, a degree of crystallinity (%) derived from ethylene unit (non-conjugated olefin unit) in the range of 100 °C to 150 °C was calculated from a ratio (ΔH₂/ΔH₀) of the endothermic peak energy (ΔH₂) in the range of 100 °C to 150 °C of the copolymer with respect to the crystal melting energy (ΔH₀) of the polyethylene.
The endothermic peak energy of the copolymer sample and the crystal melting energy of polyethylene were measured, respectively, by a differential scanning calorimeter (DSC) "DSCQ2000" manufactured by TA Instruments Japan. The measurement results are shown in Table 1. Further, FIGS. 1 to 4 show DSC charts of the copolymers of Comparative Example 1 and Examples 1 to 3, respectively.

### < Melting point >

Melting point (Tₘ) of each of the copolymers was measured according to JIS K 7121-1987 by using a differential scanning calorimeter (DSC) "DSCQ2000" manufactured by TA Instruments Japan.

### < Endothermic peak energy >

A sample was heated for each of the copolymers from -150 °C to 150 °C at a temperature-increasing rate of 10 °C/minute according to JIS K 7121-1987 by using a differential scanning calorimeter (DSC) "DSCQ2000" manufactured by TA Instruments Japan, so that an endothermic peak energy in the range of 0 °C to 120 °C observed in the heating, i.e. in the first run, was measured.

### < Glass transition temperature >

The glass transition temperature (T_{g}) of each of the copolymers was measured according to JIS K 7121-1987 by using a differential scanning calorimeter (DSC) "DSCQ2000" manufactured by TA Instruments Japan.

**[Table 1]**

| | | Comp. EX. 1 | Example 1 | Example 2 | Example 3 | Example 4 | Example 5 |
|---|---|---|---|---|---|---|---|
| Weight average molecular weight (Mw) w) | × 10³ | 417 | 338 | 298 | 303 | 247 | 198 |
| Number average molecular weight (Mn) | × 10³ | 148 | 152 | 124 | 130 | 137 | 96 |
| Molecular weight distribution (Mw/Mn) | - | 2.82 | 2.22 | 2.40 | 2.33 | 1.80 | 2.02 |
| Content of ethylene unit | mol % | 86 | 75 | 78 | 75 | 48 | 71 |
| Content of butadiene unit | mol % | 9 | 14 | 13 | 15 | 43 | 24 |
| Content of styrene unit | mol % | 5 | 11 | 9 | 10 | 9 | 5 |
| ΔH₁ (0°C - 100°C) | J/g | 38.5 | 32.8 | 40.6 | 41.0 | 29.8 | 46.0 |
| ΔH₂ (100°C - 150°C) | J/g | 12.4 | 1.5 | 1.1 | 1.5 | 0.0 | 0.0 |
| Degree of crystallinity (0°C - 100°C) | % | 13.1 | 11.2 | 13.9 | 14.0 | 10.2 | 15.7 |
| Degree of crystallinity (100°C - 150°C) | % | 4.2 | 0.5 | 0.4 | 0.5 | 0.0 | 0.0 |
| Melting point | °C | 74 | 67 | 73 | 73 | 82 | 78 |
| Endothermic peak energy (0°C - 120°C) | J/g | 51 | 35 | 42 | 43 | 30 | 46 |
| Glass transition temperature | °C | -24 | - | - | - | - | - |

It is understood from Table 1 that the copolymers of Examples 1 to 5 unanimously exhibit low degrees of crystallinity derived from non-conjugated olefin units in the range of 100 °C to 150 °C, measured by a differential scanning calorimeter (DSC), whereby these copolymers are reduced in heat generation in a low strain region and exhibits good workability, respectively. Moreover, the copolymers of Examples 1 to 5 unanimously have high contents of ethylene units, whereby these copolymers exhibit high energy-dissipating ability in a high strain region and thus is excellent in wear resistance and crack growth resistance, respectively.

### INDUSTRIAL APPLICABILITY

The copolymer of the present disclosure is applicable as a rubber component of a rubber composition. The method for manufacturing a copolymer of the present disclosure is applicable to production of the copolymer. The rubber composition of the present disclosure is applicable to various types of rubber articles including a tire. Further, the tire of the present disclosure is applicable to tires for various types of vehicles.

## Claims

1. A copolymer containing at least a non-conjugated olefin unit and a conjugated diene unit, wherein:
a content of the non-conjugated olefin unit therein is equal to or larger than 40 mol %; and
a degree of crystallinity derived from the non-conjugated olefin unit in the temperature range of 100 °C to 150 °C, measured by a differential scanning calorimeter (DSC), is equal to or smaller than 4.0 %.

2. The copolymer of claim 1, further containing an aromatic vinyl unit.

3. The copolymer of claim 1 or 2, wherein the non-conjugated olefin unit is an acyclic non-conjugated olefin unit.

4. The copolymer of claim 3, wherein the acyclic non-conjugated olefin unit is constituted of only an ethylene unit.

5. The copolymer of any of claims 1 to 4, wherein the conjugated diene unit includes 1,3-butadiene unit and/or an isoprene unit.

6. The copolymer of any of claims 1 to 5, wherein the conjugated diene unit includes only 1,3-butadiene unit.

7. The copolymer of any of claims 2 to 6, wherein the aromatic vinyl unit includes a styrene unit.

8. The copolymer of any of claims 2 to 7, wherein a content of the non-conjugated olefin unit is in the range of 40 to 97 mol %, a content of the conjugated diene unit is in the range of 1 to 50 mol %, and a content of the aromatic vinyl unit is in the range of 2 to 35 mol %.

9. A method for manufacturing a copolymer containing at least a non-conjugated olefin unit and a conjugated diene unit, wherein the method comprises the processes of:
aging a catalyst composition; and
copolymerizing at least a non-conjugated olefin compound and a conjugated diene compound under the presence of the catalyst composition thus aged, the catalyst composition including:
a rare earth element-containing compound (A) containing a rare earth element compound or a reactant resulted from a reaction between the rare earth element compound and a Lewis base;
an organic metal compound (B) represented by the following general formula (I):
YR¹ₐR²_{b}R³_{c} ... (I)
(In general formula (I), Y represents a metal selected from the group 1, 2, 12 and 13 elements in the periodic table, R¹ and R² each represent a C₁₋₁₀ hydrocarbon group or a hydrogen atom, R³ represents a C₁₋₁₀ hydrocarbon group, R¹, R² and R³ may be of either the same type or different types, a = 1 and b = c = 0 when Y is a metal selected from the group 1 elements in the periodic table, a = b = 1 and c = 0 when Y is a metal selected from the groups 2, 12 elements in the periodic table, and a = b = c = 1 when Y is a metal selected from the group 13 elements in the periodic table.);
at least one compound selected from the group consisting of an ionic compound (C) and a halogen compound (D); and
at least one compound (E) selected from the group consisting of a non-conjugated olefin compound and a conjugated diene compound.

10. A method for manufacturing a copolymer containing at least a non-conjugated olefin unit and a conjugated diene unit, wherein the method comprises the process of copolymerizing at least a non-conjugated olefin compound and a conjugated diene compound under the presence of a catalyst composition, the catalyst composition including:
a rare earth element-containing compound (A) containing a rare earth element compound or a reactant resulted from a reaction between the rare earth element compound and a Lewis base;
an organic metal compound (B) represented by the following general formula (I):
YR¹ₐR²_{b}R³_{c} ... (I)
(In general formula (I), Y represents a metal selected from the group 1, 2, 12 and 13 elements in the periodic table, R¹ and R² each represent a C₁₋₁₀ hydrocarbon group or a hydrogen atom, R³ represents a C₁₋₁₀ hydrocarbon group, R¹, R² and R³ may be of either the same type or different types, a = 1 and b = c = 0 when Y is a metal selected from the group 1 elements in the periodic table, a = b = 1 and c = 0 when Y is a metal selected from the groups 2, 12 elements in the periodic table, and a = b = c = 1 when Y is a metal selected from the group 13 elements in the periodic table.);
at least one compound selected from the group consisting of an ionic compound (C) and a halogen compound (D); and
at least one compound (E') selected from the group consisting of a non-conjugated olefin compound and a conjugated diene compound which are different in types from the non-conjugated olefin compound and the conjugated diene compound which are copolymerized in the copolymerization process.

11. The method for manufacturing a copolymer of claim 9 or 10, wherein the copolymer further contains an aromatic vinyl unit and the copolymerization process includes copolymerizing the non-conjugated olefin compound, the conjugated diene compound and an aromatic vinyl compound.

12. The method for manufacturing a copolymer of claim 11, wherein the copolymer has a content of the non-conjugated olefin unit in the range of 40 to 97 mol %, a content of the conjugated diene unit in the range of 1 to 50 mol %, and a content of the aromatic vinyl unit in the range of 2 to 35 mol %.

13. The method for manufacturing a copolymer of any of claims 9 to 12, wherein the catalyst composition further contains aluminoxane (F).

14. The method for manufacturing a copolymer of any of claims 9 to 13, wherein the compound (E) or the compound (E') is a non-conjugated olefin compound having three or more carbon atoms.

15. The method for manufacturing a copolymer of any of claims 9 to 14, wherein the compound (E) or the compound (E') is a cyclic non-conjugated olefin compound.

16. The method for manufacturing a copolymer of any of claims 9 to 15, wherein the compound (E) or the compound (E') is at least one selected from norbornene, 1,3-butadiene and dicyclopentadiene.

17. A rubber composition, containing the copolymer of any of claims 1 to 8.

18. A tire, using the rubber composition of claim 17.
